# EUROPÄISCHE PATENTSCHRIFT

(11) **EP 2 708 396 B1**
(45) Veröffentlichungstag und Bekanntmachung des Hinweises auf die Patenterteilung: **28.10.2015**
(21) Anmeldenummer: 13195814.2
(22) Anmeldetag: 26.01.2005
(51) Int. Cl.: B60J 7/057, B60J 7/14, B60J 7/20

(54) **Vorrichtung zur Betätigung wenigstens eines schwenkbaren Fahrzeugaußenelements**
Device for actuating at least one exterior pivoting element of a vehicle
Dispositif d'actionnement d'au moins un élément extérieur de véhicule pivotant

(30) Priorität: 26.01.2004 DE 102004003954
(43) Veröffentlichungstag der Anmeldung: 19.03.2014
(62) Teilanmeldung aus: 05706700.1
(73) Patentinhaber: Valmet Automotive Oy, 23500 Uusikaupunki (FI)
(72) Erfinder: Jahn, Jorg, 32257 Bünde (DE); Gutendorf, Peter, 49088 Osnabrück (DE); Pellenwessel, Ansgar, 49088 Osnabrück (DE)
(74) Vertreter: Kronthaler, Wolfgang N.K.

(56) Entgegenhaltungen:
- DE-C1- 19 847 983
- US-A- 5 772 274

## Beschreibung

Die Erfindung betrifft eine Vorrichtung zur Betätigung wenigstens eines schwenkbaren Fahrzeugaußenelements, insbesondere eines Verdeckelements eines Cabriolet-Fahrzeugs, nach der im Oberbegriff des Patentanspruches 1 näher definierten Art.

Die Betätigung von automatisch verschwenkbaren Fahrzeugaußenteilen, welche insbesondere Verdeckelemente eines Cabriolet-Fahrzeugs und Heck- bzw. Kofferraumdeckel darstellen, aber welche auch als sonstige Fahrzeugaußenteile wie z. B. ein Tankdeckel oder ein Türelement ausgebildet sein können, erfolgt in der Praxis üblicherweise durch Fluidantriebe in Form von Hydraulikzylindern, die mit einem Ende an der Fahrzeugkarosserie angelenkt sind und mit dem anderen Ende an die zu schwenkenden Fahrzeugaußenelemente angreifen.

Neben den üblicherweise Hydrauliksystemen immanenten Nachteilen hinsichtlich des Temperaturverhaltens und des Wartungsaufwandes sowie des gewöhnlich hohen Bauraumbedarfes ist bei der Verwendung eines hydraulischen Antriebs zur Verschwenkung eines Fahrzeugaußenelementes insbesondere die begrenzte Flexibilität hinsichtlich der Gestaltung der Bewegungsbahn des Fahrzeugaußenelements nachteilig.

Aus der Praxis ist es von Cabriolet-Fahrzeugen bekannt, dass ein Verdeck oder ein Verdeckkastendeckel über einen elektrischen Antrieb bewegt wird. Hierbei kommen Linearantriebe zum Einsatz, welche als Ersatz für eine hydraulische Ansteuerung für die entsprechende Anwendung konstruiert sind, wobei die von einem Elektromotor erzeugte Linearbewegung über einen geeigneten Mehrgelenk-Mechanismus an das wenigstens eine schwenkbare Fahrzeugaußenelement übertragen wird. Ein solcher Antrieb eines schwenkbaren Fahrzeugaußenelements gestaltet sich somit ebenfalls aufwändig.

Besonders gravierend wirken sich die vorbezeichneten Nachteile bei der Betätigung von mehreren schwenkbaren Fahrzeugaußenelementen aus, wie sie beispielsweise die Verdeckelemente eines Cabriolet-Fahrzeugs darstellen. Bei Cabriolet-Fahrzeugen, deren Verdeck in einem geöffneten Zustand zusammengefaltet bzw. zusammengeklappt und üblicherweise in einem Ablageraum im Heckbereich des Fahrzeuges abgelegt ist, besteht die Problematik, mit einem möglichst leichten Verdeck und einer einfachen Kinematik eine Verdeckbewegung zwischen dessen Endlagen zu realisieren, wobei bei der Auslegung der Bewegungsbahnen des Verdecks einerseits eine ausreichende Höhe hinsichtlich des Kopfbereiches von Fahrzeuginsassen und andererseits eine möglichst geringe Höhe in Bezug auf mögliche räumliche Begrenzungen, wie z. B. ein Garagendach, zu berücksichtigen ist.

Üblicherweise werden die Dachelemente eines Verdecks hierzu über ein Verdeckgestänge angetrieben, welches über ein Hauptlager an eine Karosserie angebunden ist und in der Regel hydraulisch über Gelenke eine Kraftübertragung vom Antriebsmotor bis zu einem frontseitigen Ende des Verdecks herstellt.

Wenngleich die Bewegungsabläufe für einen Spannbügel, einen Verdeckkastendeckel und den Verdeckmechanismus an sich separat gestaltet werden können, ist jedoch bei dem Verdeckmechanismus meist eine Zwangssteuerung über den hydraulischen Antrieb gegeben, womit die einzelnen Gelenke des Verdeckgestänges nicht separat ansteuerbar sind.

Die deutsche Patentschrift DE 198 47 983 C1 beschreibt ein mehrteiliges, versenkbares Fahrzeugverdeck, welches die Möglichkeit der Ansteuerung von mehreren Verdeckelementen unabhängig voneinander bietet. Hierzu wird ein mehrteiliges, versenkbares Fahrzeugverdeck mit wenigstens zwei biegesteifen Verdeckelementen, die schwenkbar miteinander und über wenigstens ein Verdeckelement schwenkbar mit der Fahrzeugkarosserie verbunden sind, derart ausgestaltet, dass zur Verbindung der wenigstens zwei biegesteifen Verdeckelemente miteinander bzw. mit der Fahrzeugkarosserie Drehgelenke vorgesehen sind, wobei je Verbindung wenigstens eines der Drehgelenke mittels eines fluidischen Antriebs antreibbar ist.

Bei dieser bekannten Lösung wird ein herkömmliches Getriebegestänge durch einen aufwändigen Mechanismus mit mehreren hydraulischen Antrieben ersetzt. Neben dem erforderlichen konstruktiven Aufwand und der Erfordernis einer separaten Hydraulikpumpe für jeden Gelenkpunkt, um verschiedene Gelenkpunkte mit unabhängigen Volumenströmen ansteuern zu können, sowie einem entsprechend hohen Gewicht des Verdecks ist die Geschwindigkeit der Verdeckbewegung durch die systemimmanenten Nachteile eines hydraulischen Antriebs beschränkt, zu denen die große Temperaturabhängigkeit, die aufgrund der vergleichsweise geringen Steifigkeit von hydraulischen Systemen und deren Totzeiten gegebenen Einschränkungen bei der Geschwindigkeitsregelung sowie ein schlechter Wirkungsgrad zählen.

Weiterhin ist aus der US 5,772,274 A ein Verdeck eines Cabriolet-Fahrzeugs bekannt, welches mittels eines mit einem Verdeckantriebsmechanismus zusammenwirkenden Elektromotors zwischen einer geschlossenen und einer offenen Position verlagerbar ist. Der Elektromotor treibt einen Hauptlenker an, welcher mit weiteren Verdeckelementen über ein Verdeckgestänge verbunden ist. Der Elektromotor kann den Hauptlenker hierzu um einen Drehpunkt verschwenken. Zudem ist ein weiterer Elektromotor vorgesehen, mittels welchem ein Spannbügel um einen weiteren Drehpunkt gegenüber dem Hauptlenker verlagert werden kann.

Es ist daher Aufgabe der vorliegenden Erfindung, eine Vorrichtung zur Betätigung wenigstens eines schwenkbaren Fahrzeugaußenelements, insbesondere eines Verdeckelements eines Cabriolet-Fahrzeugs, nach der eingangs näher beschriebenen Art zu schaffen, welche im Hinblick auf einen einfachen, flexibel gestaltbaren und schnelleren Bewegungsablauf bei der Verschwenkung des wenigstens einen Fahrzeugaußenelements, eine einfachere Konstruktion und ein geringeres Gewicht verbessert ist.

Erfindungsgemäß wird diese Aufgabe durch die im kennzeichnenden Teil des Patentanspruches 1 genannten Merkmale gelöst.

Es wird eine Vorrichtung zur Betätigung mehrerer schwenkbarer Fahrzeugaußenelemente vorgeschlagen, welche Verdeckelemente eines Verdecks eines Cabriolet-Fahrzeugs sind und wenigstens zusammenfaltbare Dachelemente umfassen, von denen wenigstens ein Dachelement schwenkbar mit der Fahrzeugkarosserie verbunden ist, wobei die Verbindung der Verdeckelemente untereinander bzw. gegenüber der Fahrzeugkarosserie jeweils wenigstens ein Drehgelenk und wenigstens einen Antrieb vorsieht, wobei als Antrieb für Drehgelenke von Verbindungen zumindest zwischen den Verdeckelementen untereinander ein Elektromotor vorgesehen ist, welcher ein Antriebsmoment direkt in ein zugeordnetes Drehgelenk einleitet, wobei jeweils wenigstens ein Drehgelenk unterschiedlicher Verbindungen separat ansteuerbar ist.

Erfindungsgemäß wird vorgeschlagen, dass eine Verbindung der Verdeckelemente untereinander bzw. mit der Fahrzeugkarosserie durch wenigstens ein ansteuerbares Drehgelenk und wenigstens ein passives Drehgelenk gebildet wird, wobei die zugeordnete Drehachse der Verbindung eine Drehachse eines passiven Drehgelenks ist.

Bei der Verwendung von aktiven Drehgelenken, welche eine unmittelbare angetriebene Verbindung zwischen zwei Teilen darstellen, und passiven Drehgelenken, welche z. B. durch eine Nietung gebildet sein können und nur eine Drehachse bilden, kann eine Verbindung zwischen zwei Verdeckelementen bzw. einem Verdeckelement und der Fahrzeug-Karosserie derart gestaltet werden, dass das aktive Drehgelenk nicht direkt an der Drehachse der Verbindung angreift, sondern die Verdrehung hieran beispielsweise mittels eines Hilfshebels bewirkt, so dass das aktive Drehgelenk nur dem erforderlichen Drehmoment stand halten muss und nicht den weiteren im Gelenkpunkt der Verbindung auftretenden Kräften. Das aktive Drehgelenk bildet somit bei einer derartigen Ausgestaltung einen Antrieb für ein die eigentliche Drehachse der Verbindung bildendes passives Drehgelenk.

Die erfindungsgemäße Vorrichtung hat den Vorteil, dass durch die Vermeidung von systembedingten Totzeiten eines hydraulischen Antriebs und dessen geringer Steifigkeit ein deutlich schnellerer Bewegungsablauf realisierbar ist.

Durch die Verwendung von antreibbaren Drehgelenken, welche als tragende Drehgelenke einsetzbar sind, können vorteilhafterweise beliebige, flexible Bewegungsbahnen dargestellt werden. Mit einem erfindungsgemäßen Antrieb können Bewegungsbahnen dargestellt werden, welche sowohl den Forderungen nach einer ausreichenden Kopfhöhe für Passagiere z. B. im Fond gerecht werden als auch einen Beschädigungsschutz durch einen einstellbaren Abstand gegenüber einem Höhenhindernis, wie beispielsweise einer Garagendecke, bieten.

Weiterhin von Vorteil ist bei einer erfindungsgemäßen Ausgestaltung eines Antriebs für ein schwenkbares Fahrzeugaußenelement die Möglichkeit der Bereitstellung von Komfortfunktionen, wie einer den räumlichen, ggf. über eine geeignete Sensorik ermittelten Umgebungsbedingungen angepasste Automatik, mittels der ein Verdeck bei vordefinierten'Umgebungsbedingungen oder Ereignissen, wie z. B. Regen, selbständig schließt oder öffnet.

So kann beispielsweise durch eine Abstandssensorik und zugeordnete, in der zentralen elektrischen Steuereinheit abgelegte Ansteuermodi die Verdeckbewegung der zur Verfügung stehenden Raumhöhe optimal angepasst werden.

Des Weiteren ist die Betätigung des wenigstens einen schwenkbaren Fahrzeugaußenelements über eine Fernbedienung möglich, wozu bei einem Verdeck das Aufklappen lediglich eines Front-Dachelementes und somit die Schaffung eines Targa-ähnlich geöffneten Verdecks zählt.

Das Vorsehen eines Elektromotors als Antrieb für das wenigstens eine Drehgelenk hat des Weiteren den Vorteil, dass anhand des Motorstroms des zugeordneten Gelenkantriebs eine einfache Möglichkeit einer Einklemmerkennung gegeben ist, wobei mit geringer Reaktionszeit bei einem Verdeck ein Verdeckstop oder eine reversible Verdeckbewegung einleitbar und somit ein hoher Einklemmschutz verwirklichbar ist. Des Weiteren ist auf diese Weise eine vereinfachte Ortung der Störstelle möglich.

Weiterhin können auch Möglichkeiten einer Notbetätigung oder einer Selbsthemmung vorgesehen sein.

Elektromotoren stellen kostengünstige, einfache und kompakte Bauelemente dar, welche bei den erforderlichen Motorkräften mit geringem Bauraumbedarf ausgelegt werden können und universal für verschiedene Drehgelenke und verschiedene schwenkbare Fahrzeugaußenelemente oder Baugruppen hiervon eingesetzt werden können.

Darüber hinaus bieten sie alle Möglichkeiten zur Steuerung und Regelung der Antriebe entsprechend der gewünschten unabhängigen Bewegungen der Gelenkpunkte bzw. Drehgelenke unabhängig von den Umgebungstemperaturen, sind geräuscharm und haben einen geringen Wartungsbedarf.

In einer vorteilhaften Ausführung ist jeder Verbindung der Verdeckelemente untereinander bzw. mit der Fahrzeugkarosserie um eine Drehachse ein Elektromotor zugeordnet. Auf diese Weise lässt sich die höchste Flexibilität hinsichtlich einer unabhängigen Bewegung der einzelnen Verdeckelemente realisieren.

In hiervon abweichenden Ausführungen ist es jedoch auch denkbar, dass nicht jeder Drehachse ein Elektromotor zugeordnet ist, sondern dass ein Antrieb für mehr als eine Drehachse verwendet wird. In der Praxis lassen sich häufig Drehachsen, insbesondere Drehachsen mit einem nahezu synchronen Bewegungsablauf, auf einfache Weise koppeln, wobei eine Aufsplittung des Antriebs eines Elektromotors auf zwei oder mehr drehende Wellen denkbar ist, oder eine Zwangsführung einer der Drehachsen.

Wenn ein Elektromotor mehrere Drehachsen zugeordnet ist, lassen sich erheblich Kostenvorteile und eine deutliche Reduktion des Bauraumbedarfs erzielen.

Hinsichtlich der Ansteuerung eines schwenkbaren Fahrzeugaußenelements bzw. Verdeckelements kann es vorgesehen sein, dass mehrere Elektromotoren mit einer zentralen elektrischen Steuereinheit verbunden sind.

Abweichend hierzu oder ergänzend kann jedoch auch zumindest ein Teil der verwendeten Elektromotoren jeweils eine eigene Steuereinheit aufweisen, welche jeweils über einen Datenbus, z. B. eine CAN-Bus eines Bordnetzes des Fahrzeugs, mit wenigstens einer weiteren Steuereinheit für wenigstens einen Elektromotor verbunden ist.

Hinsichtlich der Anordnung der Elektromotoren sind viele Alternativen möglich, wobei die Elektromotoren bei in Fahrzeuglängsrichtung verschwenkbaren Fahrzeugaußenelementen je nach Package-Gestaltung zentral auf der Fahrzeuglängsachse oder dezentral zur Fahrzeuglängsachse angeordnet sein können.

Je nach Anordnung der Elektromotoren sind die von den Elektromotoren.zu Paarungen von Drehgelenken führenden, vorzugsweise biegsamen Wellen hinsichtlich ihrer Torsionssteifigkeit so auszulegen, dass sich unterschiedliche Längen von dem Elektromotor zu dem Drehgelenk nicht auf den Gleichlauf von gegenüber liegend angeordneten Drehgelenken auswirken.

Besonders vorteilhaft ist die erfindungsgemäße Vorrichtung auch, wenn das zu verschwenkende Fahrzeugaußenelement ein Deckelelement ist, welches aus einer Schließstellung wenigstens an einer Kante durch Verschwenkung mittels wenigstens eines antreibbaren Drehgelenks und wenigstens eines zugeordneten Antriebs um eine gegenüberliegende Kante anhebbar ist. Solche Deckelelemente, wie sie z. B. ein Kofferraumdeckel oder ein Verdeckheckkastendeckel oder ein diese beiden Funktionen kombinierender heckseitiger Deckel des Fahrzeugs darstellen.

Häufig ist es gewünscht, ein Drehgelenk, welches an der der Drehachse des Deckelelements zugeordneten Kante zur Festlegung des Deckelelements an der Fahrzeugkarosserie dient, möglichst platzsparend auszuführend. Hierbei ist es besonders vorteilhaft, wenn das wenigstens eine antreibbare Drehgelenk an einem Gestänge angreift, welches mit einem Ende an der Fahrzeugkarosserie gelenkig festgelegt ist und mit dem anderen Ende an einem in Fahrzeuglängsrichtung beabstandet zu einer Drehachse des Deckelelements liegenden Bereichs des Deckelelements gelenkig festgelegt ist.

Auf diese Weise wird das wenigstens eine antreibbare Drehgelenk aus dem Bereich der gelenkigen Anbindung an die Fahrzeugkarosserie herausverlagert, so dass diese mit geringstem Bauraumbedarf beispielsweise mit einem Schwanenhalslager ausführbar ist.

Durch die räumliche Distanz des wenigstens einen antreibbaren Drehlagers zu der passiven Anlenkung des Deckelelements an die Fahrzeugkarosserie kann der Bereich der Anlenkung auch als ein Wasserkanal ausgebildet sein, ohne dass deswegen zusätzliche Maßnahmen zum Schutz von elektrischen Bauteilen vor Feuchtigkeit ergriffen werden müssen.

Des Weiteren kann es vorgesehen sein, dass das Gestänge mit dem wenigstens einen aktiven Drehgelenk aus zwei miteinander verbundenen Hebeln gebildet ist, welche unterschiedlich lang sind, wobei das Deckelelement in seiner Schließstellung durch Verschwenken des Gestänges in eine Übertotpunktstellung verriegelbar ist. Bei einer derartigen Verschwenkbarkeit des Gestänges wird ohne zusätzliche Verriegelungsmittel eine Verschlussmöglichkeit geschaffen, da in Übertotpunktstellung das Deckelelement nicht mehr zu öffnen ist.

Weitere Vorteile und vorteilhafte Ausgestaltungen des Gegenstandes nach der Erfindung sind der Beschreibung, der Zeichnung und den Patentansprüchen entnehmbar.

Mehrere Ausführungsbeispiele einer Vorrichtung nach der Erfindung sind in der Zeichnung schematisch vereinfacht dargestellt und werden in der nachfolgenden Beschreibung näher erläutert.

Es zeigt:
- Fig. 1: eine vereinfachte dreidimensionale Ansicht eines Verdecks für ein Cabriolet-Fahrzeug in Alleinstellung, wobei sich das Verdeck in Schließstellung befindet;
- Fig. 2: eine vereinfachte Draufsicht auf einen Elektromotor und zwei hiermit wirkverbundene Drehgelenke eines Dachelementes des Verdecks gemäß Fig. 1;
- Fig. 3: eine vereinfachte, teilweise geschnittene Seitenansicht eines Drehgelenks gemäß Fig. 1 und Fig. 2;
- Fig. 4: eine weitere teilweise geschnittene Seitenansicht des Drehgelenks gemäß Fig. 3;
- Fig. 5: einen Schnitt durch das Drehgelenk der Fig. 3 und Fig. 4 entlang einer Linie A-A in Fig. 3;
- Fig. 6: einen Schnitt durch das Drehgelenk der Fig. 3 und Fig. 4 entlang einer Linie B-B in Fig. 4;
- Fig. 7: eine vereinfachte dreidimensionale Darstellung einer Anbindung eines Spannbügels des Verdecks gemäß Fig. 1 in Alleinstellung;
- Fig. 8.1 bis 8.11: jeweils eine schematisierte Positionsskizze der Dachelemente des Verdecks gemäß Fig. 1 während eines ersten Bewegungsablaufs zur Verdecköffnung;
- Fig. 9.1 bis 9.13: jeweils eine schematisierte Positionsskizze der Dachelemente des Verdecks gemäß Fig. 1 während eines zweiten Bewegungsablaufs zur Verdecköffnung;
- Fig. 10.1 bis 10.12: jeweils eine schematisierte Positionsskizze der Dachelemente des Verdecks gemäß Fig. 1 während eines dritten Bewegungsablaufs zur Verdecköffnung;
- Fig. 11.1 bis 11.5: jeweils eine schematisierte Positionsskizze der Dachelemente des Verdecks gemäß Fig. 1 während eines vierten Bewegungsablaufs zur Verdecköffnung; und
- Fig. 12.1 bis 12.3: jeweils eine schematisierte Positionsskizze eines Verdeckkastendeckels während eines Bewegungsablaufs zwischen einer geöffneten Stellung des Verdeckkastendeckels und einer verriegelten Schließstellung.

Bei den nachfolgend beschriebenen Ausführungen einer erfindungsgemäßen Vorrichtung dient diese zur Betätigung eines schwenkbaren Fahrzeugaußenelements, welches hier jeweils als ein Verdeckelement eines Verdeckelements eines Verdecks 1 eines Cabriolet-Fahrzeugs 2 ausgebildet ist.

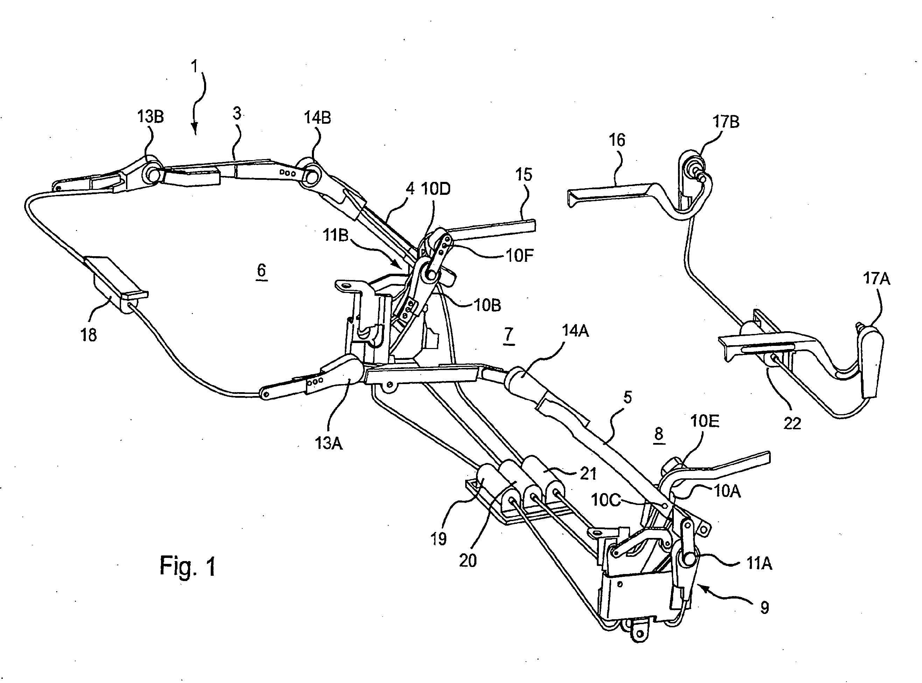

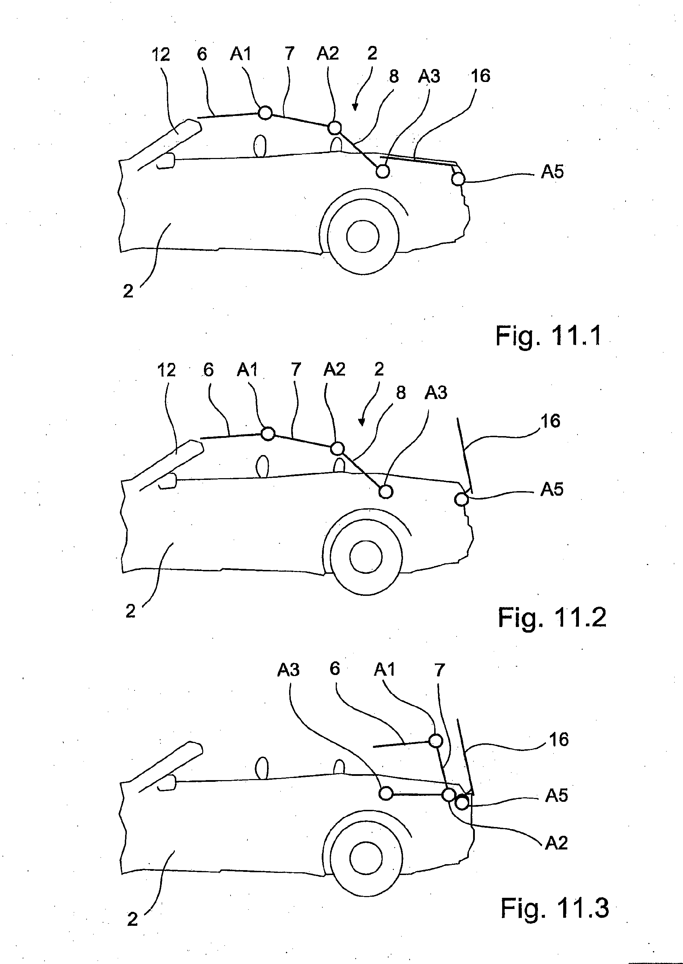

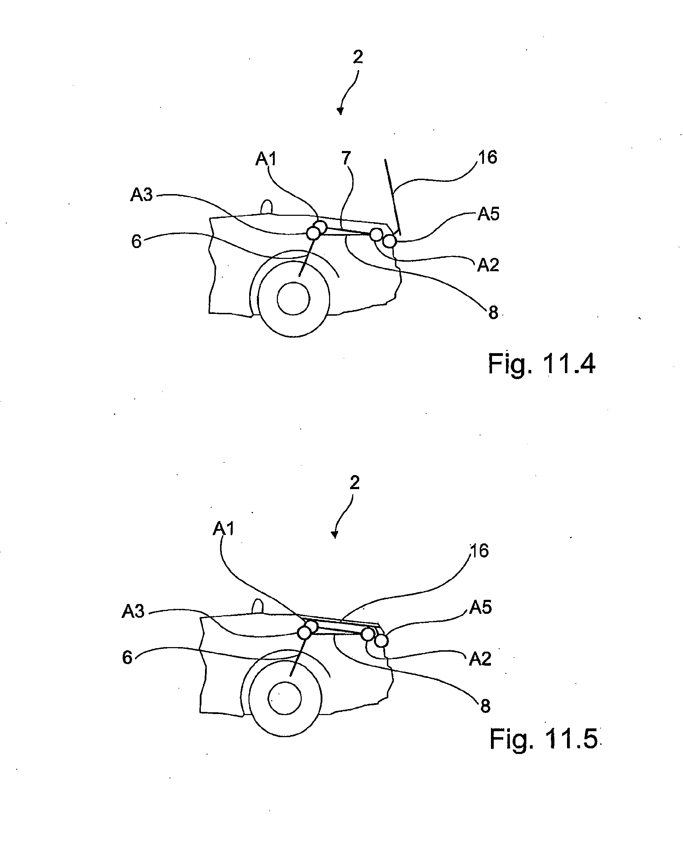

In Fig. 1 ist das Verdeck 1 für das insgesamt mit 2 bezeichnete, in den Fig. 11.1 bis 11.5 näher gezeigte Cabriolet-Fahrzeug 2 dargestellt, welches drei zusammenfaltbare, durch bezüglich einer Fahrzeuglängsachse gegenüberliegende äußere Dachrahmenprofilpaare 3, 4, 5 begrenzte Dachelemente 6, 7, 8 aufweist.

Bei dem in den Figuren gezeigten Verdeck 2 handelt es sich jeweils um ein so genanntes Hard-Top-Klappdach mit einem im geschlossenen Zustand an einen Windschutzscheibenrahmen 12 grenzenden Front-Dachelement 6, einem mittleren Dachelement 7 und einem Heck-Dachelement 8.

Die nachstehenden Ausführungen treffen jedoch ebenso auf ein Verdeck mit einer fest auf biegesteife, rahmenartige Dachelemente aufgespannten Textildachhaut zu, da derartige rahmenartige Dachelemente den vorliegend beschriebenen biegesteifen Dachelementen 6, 7, 8 entsprechen.

Wie der Fig. 1 zu entnehmen ist, ist das heckseitig das Verdeck 2 begrenzende Heck-Dachelement 8 an einem Hauptlager 9 schwenkbar an zwei symmetrisch angeordneten Gelenkpunkten mittels dort angeordneter Drehgelenke 11A, 11B mit der Fahrzeugkarosserie verbunden.

Die Verbindung der Dachelemente 6, 7, 8 untereinander ist ebenfalls jeweils mittels Drehgelenken ausgeführt, wobei an einer ersten Drehachse A1 zwischen dem Front-Dachsegment 6 und dem mittleren Dachsegment 7 eine Paarung aus zwei Drehgelenken 13A, 13B und an einer zweiten Drehachse A2 zwischen dem mittleren Dachsegment 7 und dem Heck-Dachsegment 8 eine weitere Paarung zweier symmetrisch zu der Fahrzeuglängsachse angeordneter Drehgelenke 14A, 14B vorgesehen ist.

Weiterhin sind als schwenkbare Fahrzeugaußenelemente ein Spannbügel 15 des Verdecks 2 im Bereich des Hauptlagers 9 über weitere Paarungen an Drehgelenken 10A, 10B, 10C, 10D, 10E, 10F und ein heckseitig des Verdecks 2 angeordneter Verdeckkastendeckel 16, welcher einen Ablageraum für das Verdeck 2 in dessen geöffnetem Zustand verschließt, über zwei an dessen heckseitigem Ende angebrachte Drehgelenke 17A, 17B mit der Fahrzeugkarosserie schwenkbar verbunden.

Für jede Drehachse A1, A2, A3 der Dachelemente 6, 7, 8 sowie die Drehachse A4 des Spannbügels 15 und die Drehachse A5 des Verdeckkastendeckels 16 ist vorliegend ein separat ansteuerbarer Antrieb vorgesehen, welcher jeweils als ein mit einer zentralen elektrischen Steuereinheit verbundener Elektromotor 18, 19, 20, 21, 22 ausgebildet ist.

Das Moment der Elektromotoren 18 bis 22 ist bei der gezeigten Ausführung der Erfindung jeweils mittels biegsamer Wellen 23 in die hier baugleich ausgeführten Drehgelenke 10A, 10B, 11A, 11B, 13A, 13B, 14A, 14B, 17A, 17B einleitbar.

Bei der gezeigten Ausführung sind alle Elektromotoren 18, 19, 20, 21, 22 mit einer zentralen Steuereinheit verbunden, welche die Elektromotoren 18, 19, 20, 21, 22 steuert bzw. regelt.

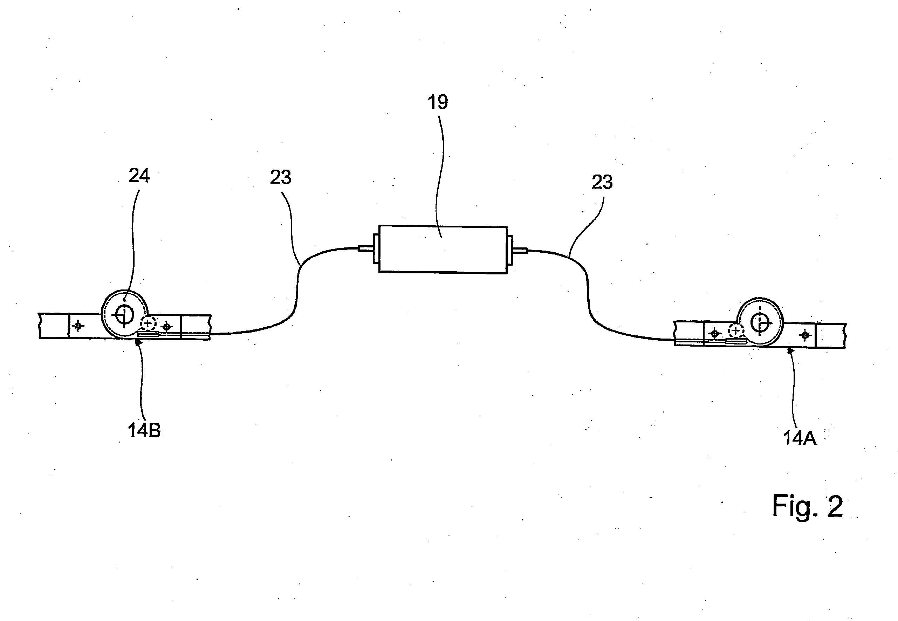

Die Fig. 2 zeigt exemplarisch in vereinfachter Weise den den Drehgelenken 14A, 14B zwischen dem Front-Dachelement 6 und dem mittleren Dachelement 7 zugeordneten Elektromotor 19, welcher wie die anderen Elektromotoren mit jeweils beiden bezüglich der Fahrzeuglängsachse gegenüber liegenden Drehgelenken 14A, 14B mittels biegsamer Wellen 23 verbunden ist.

Die gezeigten Elektromotoren 18 bis 22 sind jeweils als DC-Motoren ausgebildet und bezüglich der Fahrzeuglängsachse zentral angeordnet, jedoch ist in einer hiervon abweichenden Ausgestaltung auch eine dezentrale Anordnung eines Elektromotors und dessen Verbindung mit nur einem Drehgelenk möglich.

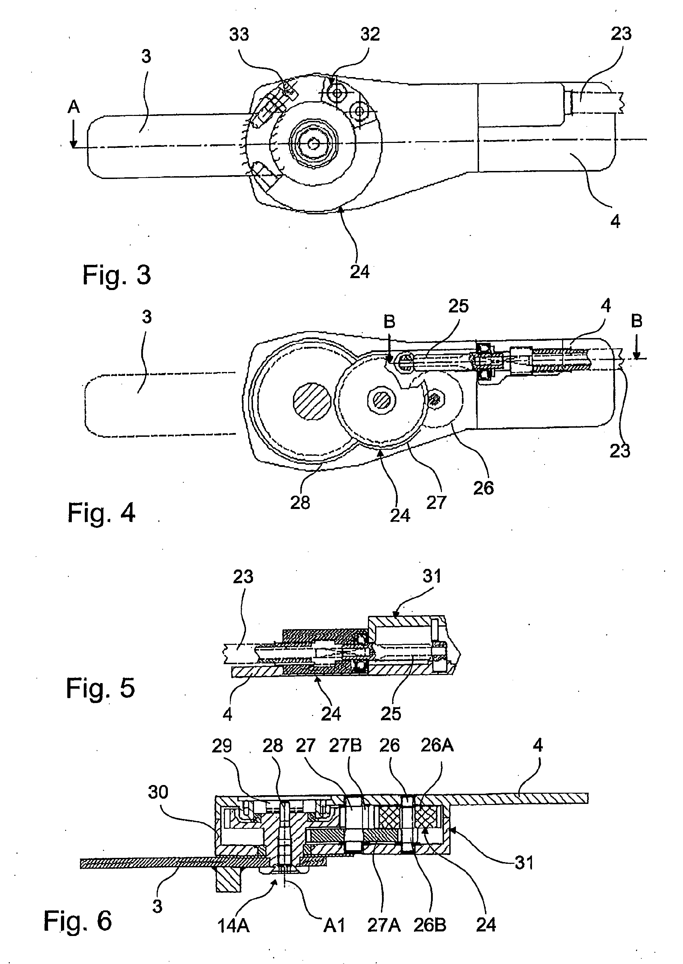

Die Drehgelenke 14A, 14B weisen jeweils eine als Untersetzungsgetriebe ausgebildete Getriebeeinrichtung 24 auf, mittels der sie mit dem betreffenden Elektromotor 19 verbunden sind, und welche in den Fig. 3 bis Fig. 6 näher dargestellt ist.

Die Getriebeeinrichtung 24 ist zwischen einem Hebel bzw. Dachrahmenteil 3 des Front-Dachelementes 6 und einem Hebel bzw. Dachrahmenteil 4 des mittleren Dachelementes 7 angeordnet, wobei der Hebel 4 des mittleren Dachrahmenteils 7 im Bereich der Getriebeeinrichtung 24 schalenartige ausgebildet ist und mit einem zwischen dem Hebel 4 und dem Hebel 3 des Front-Dachelements angeordneten Schalenteil 30 eine Lagerschale 31 für eine Hülsenkupplung bildet.

Wie insbesondere den Fig. 4 und Fig. 5 zu entnehmen ist, ist die biegsame Welle 23 mit einer an dem Hebel 4 des mittleren Dachelements 7 gelagerten Schnecke 25 der Getriebeeinrichtung 24 drehverbunden. Die Schnecke 25 steht mit einem ersten, vorliegend aus Geräuschgründen aus Kunststoff ausgebildeten Zahnrad 26 in Eingriff, welches gestuft mit einer ersten, mit der Schnecke 25 in Eingriff stehenden Zahnradstufe 26A und einer zweiten Zahnradstufe 26B kleineren Durchmessers ausgebildet ist. Die zweite Zahnradstufe 26B steht in Eingriff mit einem zweiten Zahnrad 27 bzw. einer ersten Zahnradstufe 27A desselben, deren Durchmesser größer als die erste Zahnradstufe 26A des ersten Zahnrades 26 ist. Sowohl das erste Zahnrad 26 als auch das zweite Zahnrad 27 sind beidendig in der Lagerschale 31 gelagert.

Über eine zweite Zahnradstufe 27B, welche kleiner ist als die erste Zahnradstufe 27A des zweiten Zahnrades 27, jedoch größer als die zweite Zahnradstufe 26B des ersten Zahnrades 26 ist, kämmt das zweite Zahnrad 27 mit einem dritten Zahnrad 28, dessen Achse die erste Drehachse A1 bildet und welches drehfest mit dem Hebel 3 des Front-Dachteils 6 verbunden ist.

Eine Selbsthemmung der Getriebeeinrichtung 24 wird bei der dargestellten Ausführung über die Auslegung der Steigung der Schnecke 25 erreicht. Zusätzlich oder alternativ kann diese Wirkung auch mit Bremsen an den Elektromotoren 18 bis 22 erreicht werden.

Die durch die Drehgelenke 14A, 14B verbundenen Dachelemente 6, 7 bzw. deren Hebel 3, 4 sind gegeneinander wenigstens annähernd um 360° drehbar, wobei an dem Drehgelenk 14A bzw. 14B ein mittels einer Stellschraube 33 verstellbarer Anschlag 32 vorgesehen ist.

An dem Drehgelenk 14A bzw. 14B ist wie bei den übrigen Drehgelenken ein Positionserkennungssensor 29 zur Ermittlung der Position des Verdecks 2 bzw. seiner Dachelemente angeordnet, wobei der Positionserkennungssensor 29 vorliegend als ein Potentiometer ausgebildet ist.

Der Positionserkennungssensor 29 ist bei der gezeigten Ausführung auf einfache Art und Weise auf einen Mitnehmer aufgesetzt, welcher in der Getriebeeinrichtung des jeweiligen Drehgelenks koaxial zu der jeweiligen Drehachse vorgesehen ist.

Alternativ zu einer Positionserkennung mittels eines Potentiometers sind selbstverständlich auch andere analoge und digitale Systeme anwendbar, wie z. B. Inkrementalgeber, Neigungssensoren oder Hallsensoren.

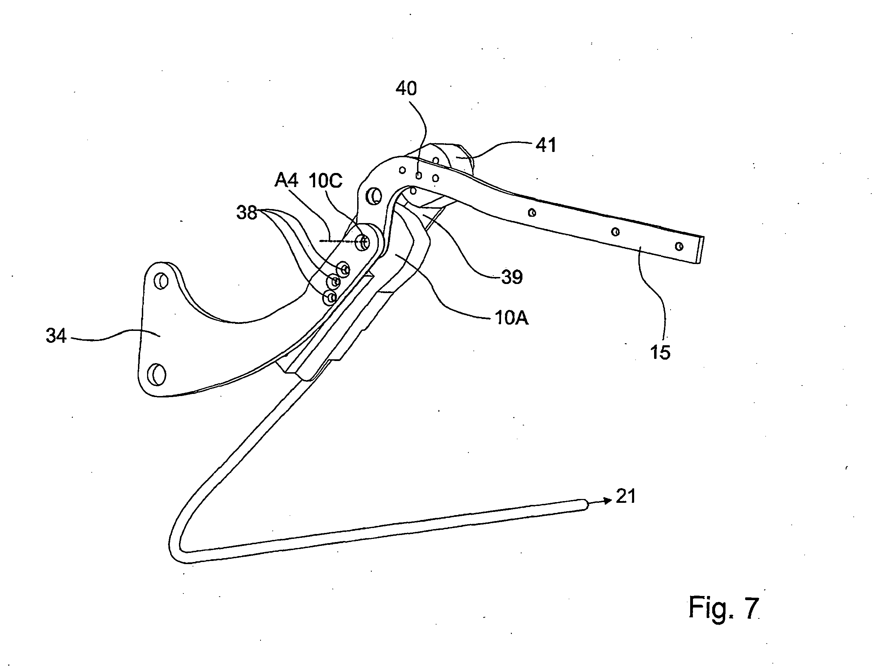

In Fig. 7 ist in vergrößerter Alleinstellung die Anbindung des Spannbügels 15 an die Fahrzeugkarosserie 9 bzw. ein hiermit verbundenes Hebelelement 34 gezeigt. Im Unterschied zu den Verbindungen der Dachelemente 6, 7, 8 untereinander und deren Anbindung an die Fahrzeugkarosserie 9 sowie die Anbindung des Verdeckkastendeckels 16 an die Fahrzeugkarosserie 9 kommen hier nicht nur direkt angetriebene aktive Drehgelenke, deren Drehachse auch die Drehachse A1, A2, A3, A5 der zugeordneten Verbindung ist, zum Einsatz.

Die Verbindung des Spannbügels 15 mit der Fahrzeugkarosserie 9 bzw. dem Hebelelement 34 ist sowohl mit von dem Elektromotor 21 direkt angetriebenen, aktiven Drehgelenken 10A, 10B als auch mit zwei Paarungen passiver Drehgelenke 10C, 10D und 10E, 10F ausgebildet, wobei die passiven Drehgelenke 10C, 10D, von denen in Fig. 7 das Drehgelenk 10C ersichtlich ist, die Drehachse A4 der Verbindung bilden.

Das aktive Drehgelenk 10A ist an dem mit der Fahrzeugkarosserie verbundenen Hebelelement 34 vorliegend über Schraubverbindungen 38 befestigt. Das Drehmoment des Drehgelenks 10A wird über einen Hilfshebel 39 an ein an dem Spannbügel 15 über Anbindungen 40 fixiertes Überbrückungselement 41 und somit an den Spannbügel 15 übertragen. Mit einer derartigen Ausgestaltung der Verbindung muss das angetriebene Drehgelenk 10A bzw. das hierzu spiegelbildliche Drehgelenk 10B im Wesentlichen nur auf das erforderliche, zu übertragende Drehmoment und nicht auf weitere im Gelenkpunkt auftretende Kräfte hin ausgelegt werden.

Abweichend von der in Fig. 1 gezeigten Ausführung können selbstverständlich auch weitere Verbindungen zwischen den Verdeckelementen und insbesondere den Verdeckelementen und der Fahrzeugkarosserie mit aktiven und passiven Drehgelenken gemäß dem in Fig. 7 gezeigten Ausführungsbeispiel ausgestaltet sein.

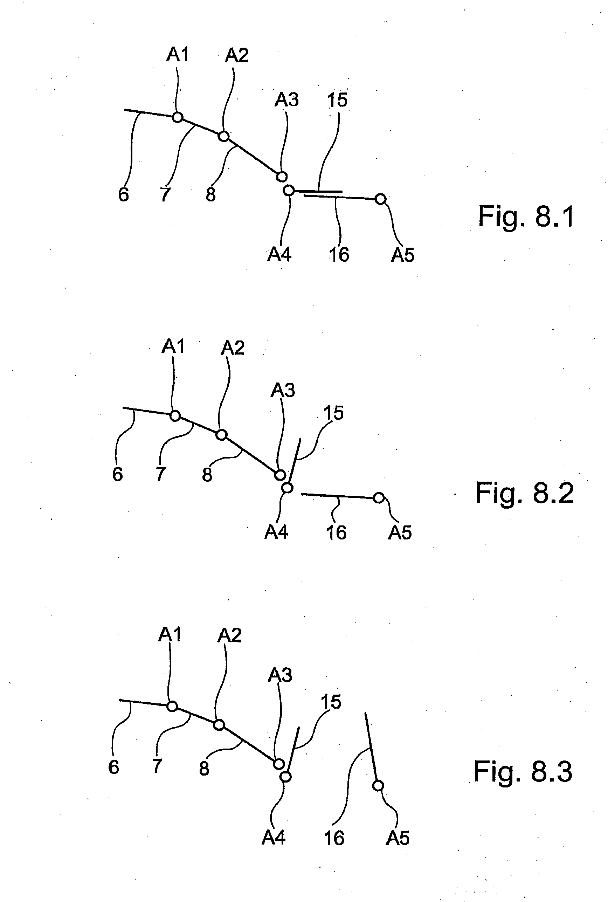

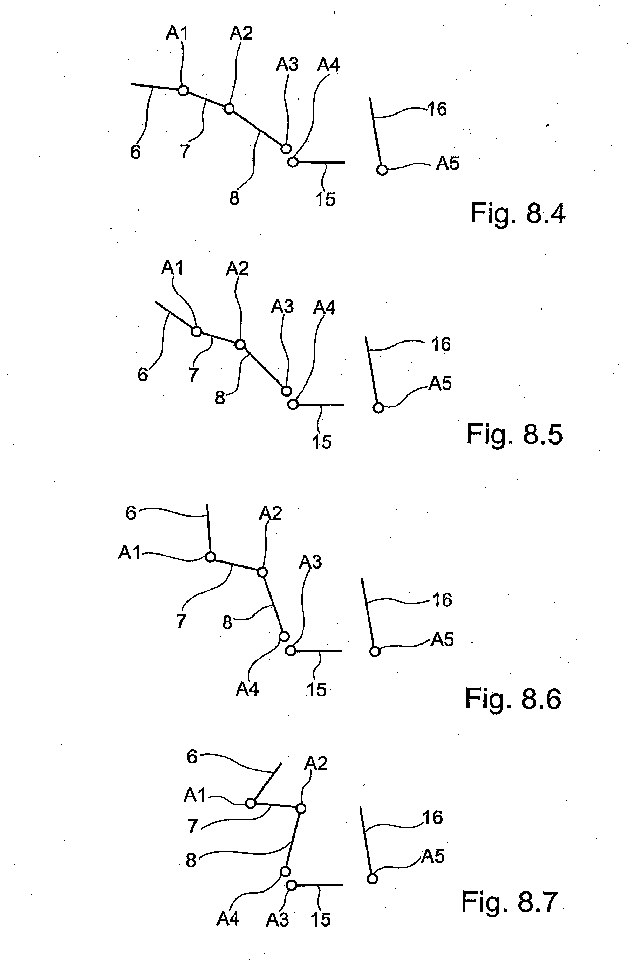

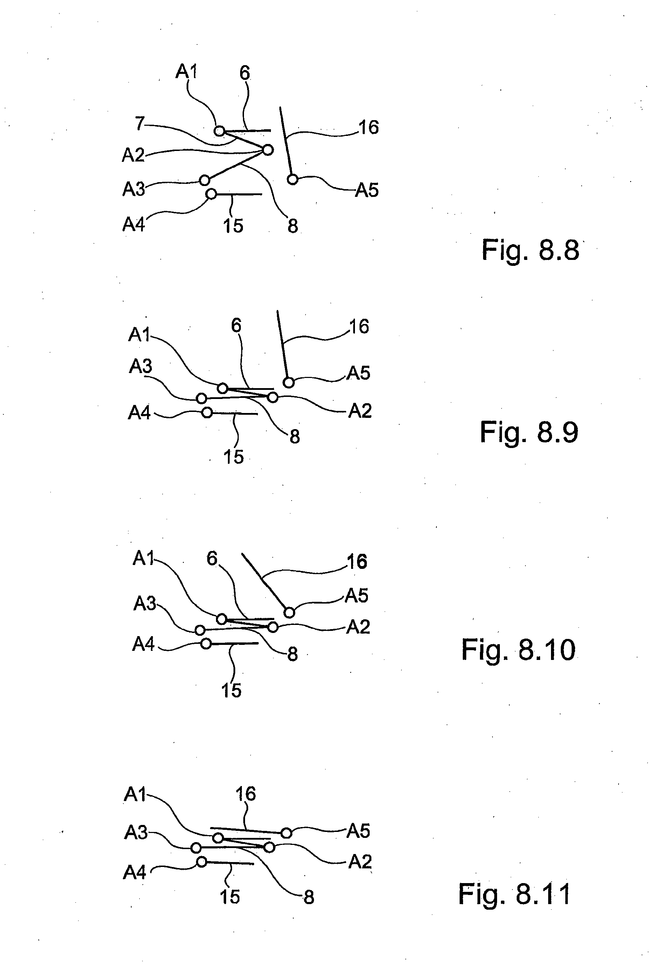

Bezug nehmend auf die Fig. 8.1 bis Fig. 8.12 ist jeweils ein Bewegungsablauf des Verdecks 2 bei einer Öffnungsbewegung dargestellt. Dabei zeigen die Fig. 8.1 bis Fig. 8.11 eine Öffnungsbewegung mit Bahnkurven, wie sie bei konventionellen, hydraulisch angetriebenen Verdecken üblich sind.

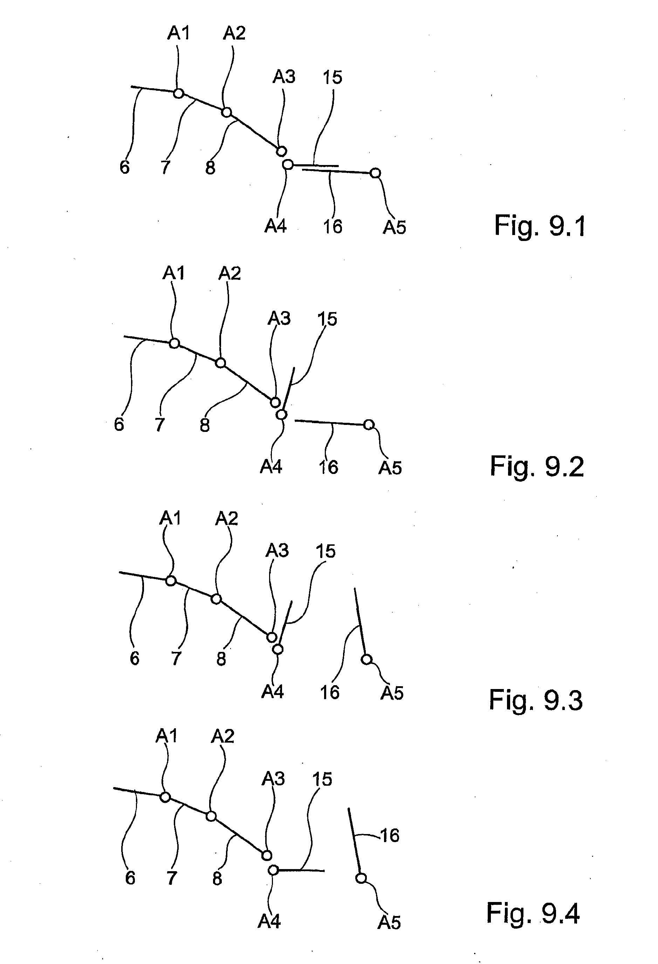

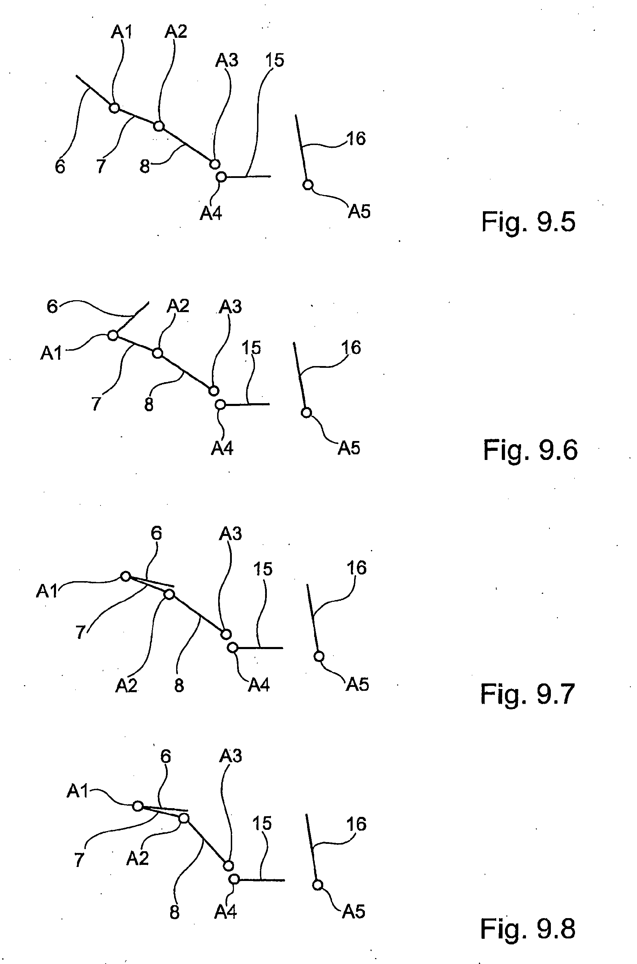

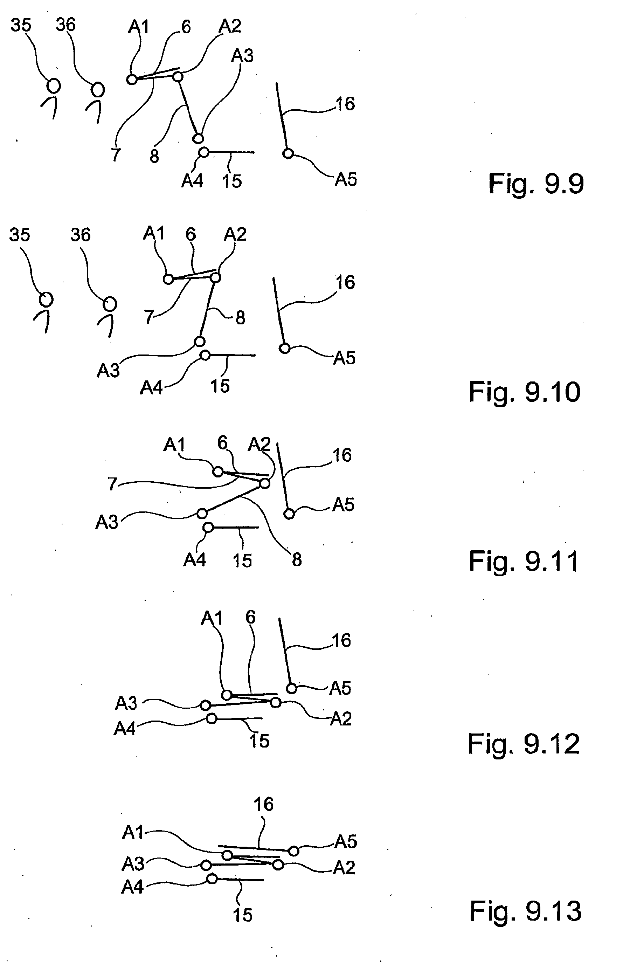

In den Fig. 9.1 bis Fig. 9.13 ist hingegen eine mit dem erfindungsgemäßen Verdeck mögliche, deutlich flachere Verdeckbewegung gezeigt, bei der im Fondbereich des Fahrzeuges noch ausreichend Kopfhöhe für sich darin befindliche Passagiere gegeben ist.

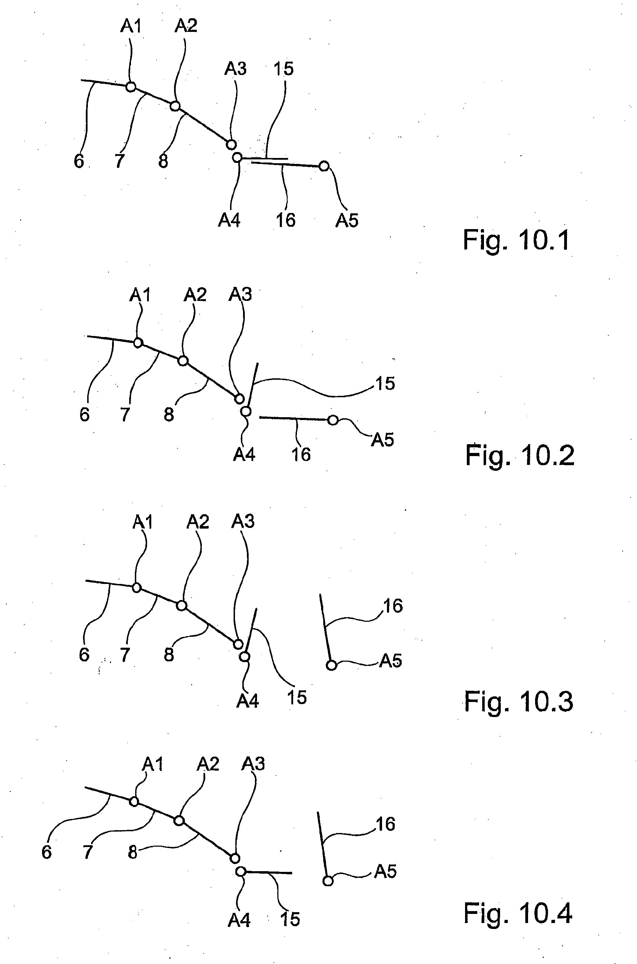

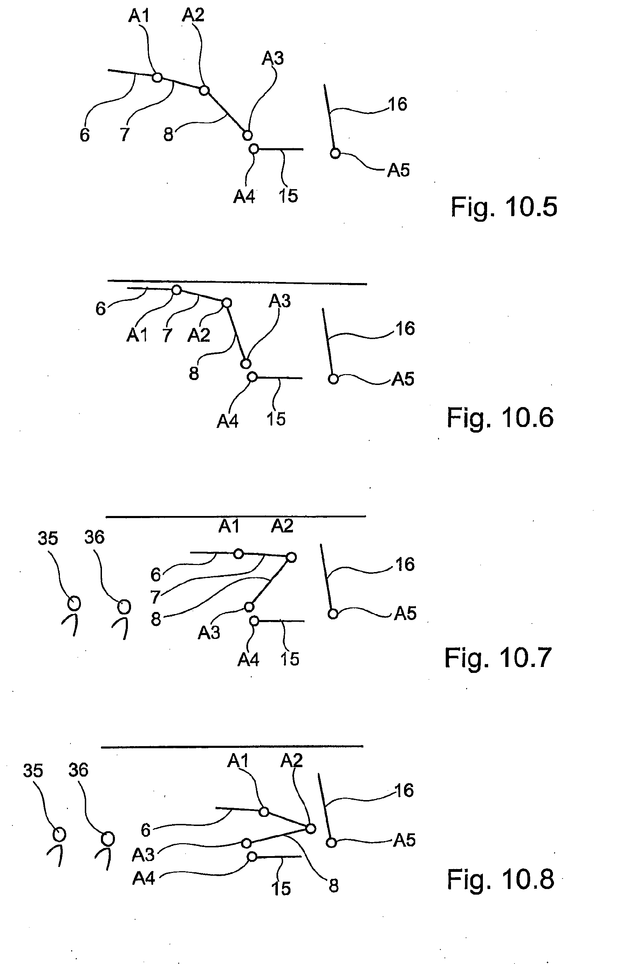

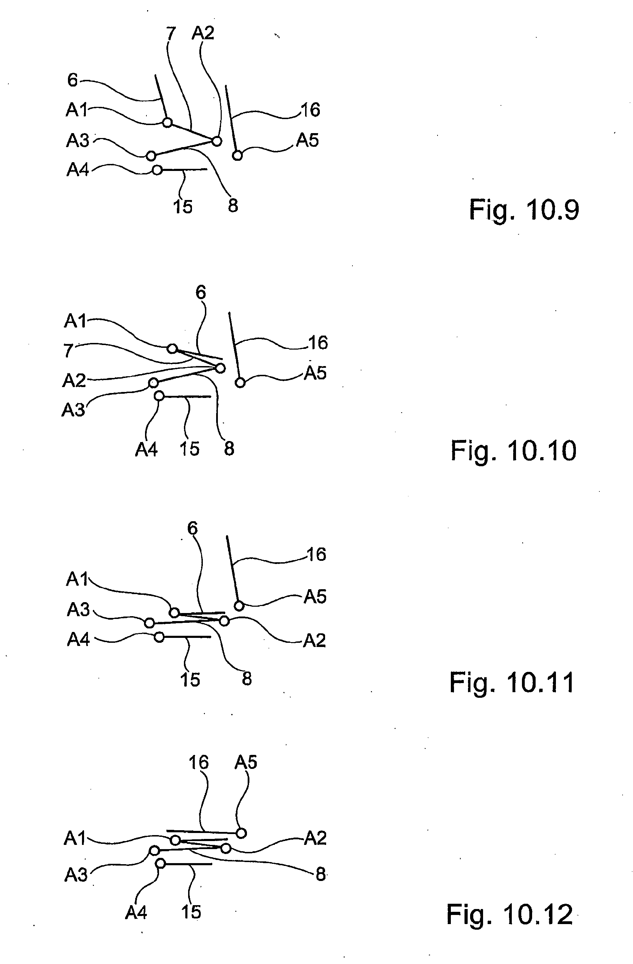

Die Fig. 10.1 bis Fig. 10.12 zeigen eine Verdecköffnungsbewegung mit einer noch niedrigeren Bahnkurve wie sie bei einem freien Fondbereich angesteuert werden kann und gegebenenfalls auch während der Fahrt des Fahrzeugs möglich ist, da mit dieser Öffnungsbewegung eine sehr geringe Windangriffsfläche und damit ein sehr niedriger Luftwiderstand realisierbar ist.

Bei jeder der in den Fig. 8.1 bis Fig. 10.12 dargestellten Verdeckbewegungen sind die drei Dachelemente 6, 7, 8 S-artig derart zusammenfaltbar, dass das Front-Dachelement 6 in einer Faltstellung bei geöffnetem Verdeck 2 heckwärts verschwenkt über dem mittleren Dachelement 7 und dem darunter liegenden, ebenfalls gegenüber seiner Stellung bei geschlossenem Verdeck 2 heckwärts verschwenkten Heck-Dachelement 8 abgelegt ist.

Bei einer Öffnungsbewegung des Verdecks 2 wird zunächst der Spannbügel 15 zur Freigabe einer Aufschwenkbewegung des Verdeckkastendeckels 16 angehoben und nach Aufstellung des Verdeckkastendeckels 16 wieder abgesenkt, wonach die Dachelemente 6, 7, 8 auf dem Spannbügel 15 abgelegt werden.

Die Öffnungsbewegung des Verdecks 2 ist dabei jeweils derart angesteuert, dass das Front-Dachelement 6 um die erste Gelenkachse A1 hoch und heckwärts verschwenkt, das mittlere Dachsegment 7 um dessen heckseitige, zweite Drehachse A2 und das Heck-Dachelement 8 um dessen heckseitige, dritte Drehachse A3 heckwärts verschwenkt.

Insbesondere Bezug nehmend auf die eine Ansteuerung mit konventionellen Bahnkurven der Dachelemente 6, 7, 8 darstellenden Fig. 8.1 bis Fig. 8.11 ist ersichtlich, dass das Hoch-und Rückschwenken des Front-Dachelementes 6 an der ersten Drehachse A1 im Wesentlichen während der Verschwenkung des mittleren Dachelementes 7 und des Heck-Dachelementes 8 erfolgt, wobei das Heck-Dachelement 8 bei Heckwärtsbewegung der zweiten Drehachse A1 heckwärts umgeklappt wird und das seine Winkelstellung während der Öffnungsbewegung nur unwesentlich ändernde mittlere Dachelement 7 darauf abgelegt wird.

In Fig. 9.1 bis 9.13 ist eine gegenüber der Ansteuerung gemäß Fig. 8.1 bis Fig. 8.11 flachere Verdeckbewegung gezeigt, bei der die Verschwenkung bzw. Klappung des Front-Dachelements 6 um die erste Drehachse A1 hoch und heckwärts im Wesentlichen vor der Verschwenkung des mittleren Dachelements 7 und des Heck-Dachelements 8 in einer Weise gemäß Fig. 8.1 bis Fig. 8.11 erfolgt.

In den Fig. 9.9 und Fig. 9.10 sind prinzipmäßig ein Vordersitz-Passagier 35 und ein Fond-Passagier 36 gezeigt, für die ausreichend Raum im Kopfbereich während dieser Öffnungsbewegung des Verdecks 2 besteht.

Die in den Fig. 10.1 bis Fig. 10.12 gezeigte Verdecköffnungsbewegung unterscheidet sich von einer in den Fig. 9.1 bis Fig. 9.13 gezeigten Öffnungsbewegung durch deutlich flachere Bahnkurven der Dachelemente 6, 7, 8, welche insbesondere dadurch erzielt werden, dass die Verschwenkung des Front-Dachelements 6 um die erste Drehachse A1 erst nach einer weitgehenden Heckwärtsverschwenkung des mittleren Dachelements 7 und des Heck-Dachelementes 8 bzw. der zweiten Drehachse A1 erfolgt.

Eine solche Ansteuerung erfolgt vorliegend in Abhängigkeit des über eine an sich bekannte Abstandserkennungssensorik ermittelten Abstandes zu einem z. B. eine Garagendecke 37 gemäß Fig. 10.6 bis Fig. 10.8 darstellenden Höhenhindernis. Aufgrund der hier eingeschränkten Höhe im Fond-Bereich wird diese Ansteuerung nur zugelassen, wenn über ein Sitzbelegungserkennung ermittelt wird, dass sich kein Passagier 36 im Fondbereich befindet.

Eine weitere vorteilhafte Verdeckbewegung, welche mit dem Verdeck 2 gemäß der Erfindung realisierbar ist, ist in den Fig. 11.1 bis 11.5 gezeigt.

Bei dieser Öffnungsbewegung des Verdecks 2 wird zunächst das mittlere Dachsegment 7 um dessen heckseitige, zweite Drehachse A2 und das Heck-Dachelement 8 um dessen heckseitige, dritte Drehachse A3 heckwärts verschwenkt, während die Winkellage des Front-Dachelements 6 im Wesentlichen gleich bleibt. In wenigstens annähernd horizontaler Position des Heck-Dachelementes 8 gemäß Fig. 11.3 werden das Front-Dachelement 6 und das mittlere Dachelement 7 derart abgelegt, dass das mittlere Dachelement 7 auf dem Heck-Dachelement 8 und wenigstens annähernd parallel zu diesem sowie das Front-Dachelement 6 demgegenüber nach unten in eine wenigstens annähernd vertikale Lage verschwenkt wird.

Auf diese Weise kann das Front-Dachelement 6 raumsparend im abgelegten Zustand des Verdecks 2 wenigstens annähernd parallel zu einer Rückbanklehne abgelegt werden.

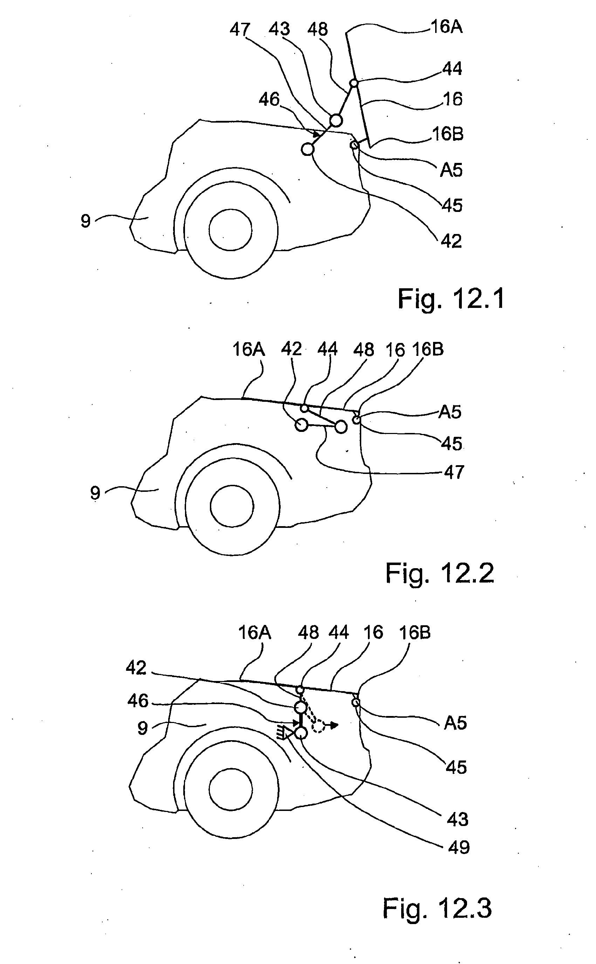

Die Fig. 12.1 bis 12.3 zeigen prinzipmäßig einen alternativen Antrieb für den Verdeckkastendeckel 16, welcher hier gleichzeitig als ein Heckdeckel ausgelegt sein kann. Es handelt sich somit bei dem Verdeckkastendeckel 16 um ein Deckelelement, welches aus einer Schließstellung wenigstens an einer Kante, wie z. B. an der Fahrzeugfrontseitigen Kante 16A durch Verschwenkung mittels antreibbarer Drehgelenke 42, 43 und eines zugeordneten Antriebs 22 um eine gegenüber liegende Kante, hier die heckseitige Kante 16B, anhebbar ist.

Die antreibbaren Drehgelenke 42, 43 greifen hier an einem aus zwei Hebeln 47, 48 gebildeten Gestänge 46 an, welches mit einem Ende an der Fahrzeugkarosserie 9 gelenkig festgelegt ist und mit dem anderen Ende an einem in Fahrzeuglängsrichtung beabstandet zur Drehachse A5 des Verdeckkastendeckels 16 liegenden Bereich des Verdeckkastendeckels 16 gelenkig festgelegt ist.

Bei der gezeigten Ausführung ist die Anlenkung des Gestänges 46 bzw. des ersten Hebels 47 an die Fahrzeugkarosserie 9 und die Verbindung der Hebel 47 und 48 untereinander jeweils als antreibbares, über eine nicht näher dargestellte Biegewelle mit einem Elektromotor verbundenes Drehgelenk 42 bzw. 43 ausgebildet, während die Anbindung des Gestänges 46 bzw. des zweiten Hebels 48 an den Verdeckkastendeckel 16 als passives Drehgelenk 44 konventioneller Bauart ausgestaltet ist.

Je nach gewünschtem Bewegungsverlauf und geometrischen Gegebenheiten kann es auch vorteilhaft sein, die Anbindung des Gestänges 46 an den Verdeckkastendeckel 16 mit einem antreibbaren Drehgelenk auszugestalten.

Die Anlenkung des Verdeckkastendeckels 16 im Bereich der Drehachse 5 an der heckseitigen Kante 16B des Verdeckkastendeckels 16 ist optional und vorliegend als passives Drehgelenk 45 ausgebildet.

Insbesondere bei Ausführungsvarianten, bei denen sich heckseitig an den Verdeckkastendeckels 16 ein weiterer Heckdeckel bzw. Kofferraumdeckel anschließt, ist es vorteilhaft, die Anlenkung des Verdeckkastendeckels 16 im Bereich seiner Drehachse A5 mittels eines raumsparenden so genannten Schwanenhalslagers auszuführen, welches zwischen einem Anlenkpunkt und der Befestigung an dem Verdeckkastendeckel in Fahrzeuglängsrichtung derart gekrümmt ist, dass es einer angrenzenden fahrzeugfrontseitigen Kante eines Heckdeckels bei einer Verschwenkung ausweichen kann. Dabei kann das Schwanenhalslager auch in einem Wasserkanal angeordnet sein. Wenn der Verdeckkastendeckels 16 an einer in Fig. 12.1 gezeigten geöffneten Stellung in eine in Fig. 12.2 gezeigte Schließstellung überführt wird, wird durch Ansteuerung des Fahrzeug fest gelagerten Drehgelenks 42 und des die Hebel 47, 48 des Gestänges 46 verbindenden Drehgelenks 43 der Verdeckkastendeckels 16 von einer annähernd vertikalen Position in eine annähernd horizontale Position abgesenkt, wobei in der in Fig. 12.2 gezeigten Schließstellung durch ein geeignetes Verschlusselement eine Verriegelung bereitgestellt werden kann.

Bei der vorliegenden Ausführung sind die Hebel 47, 48 des Gestänges 46 unterschiedlich lang ausgebildet, wodurch das Gestänge 46 in eine Art Totpunktendlage gebracht werden kann bzw. in eine Übertotpunktstellung überführbar ist. Bei der in der Fig. 12.3 gezeigten Übertotpunktstellung des Gestänges 46, in der das die Hebel 47, 48 verbindende Gelenk 43 und der an dem Verdeckkastendeckel 16 angelenkte Hebel 48 in Fahrzeugfrontrichtung geringfügig vor dem das Gestänge 46 an der Fahrzeugkarosserie 9 festlegenden Drehgelenk 43 positioniert ist, ist ein Anheben des Verdeckkastendeckels 16 von außen nicht möglich, so dass eine Verriegelung des Verdeckkastendeckels 16 ohne weitere Verschlusselemente realisiert ist.

Um die Position des Gestänges 46 in diese Verriegelungsstellung genau zu definieren, ist ein Anschlag 49 vorgesehen, an dem das Gestänge 46 in Verriegelungsstellung zur Anlage kommt.

Alternativ zu der in Fig. 12.3 gezeigten Übertotpunktstellung kann in einer anderen Ausführung gegebenenfalls der Anschlag 49 so positioniert sein, dass sich das Gestänge 46 in einer Totpunktstellung befindet.

Um im Falle eines Stromausfalls eine Notbetätigung zu ermöglichen, sind die antreibbaren Drehgelenke 42, 43 hinsichtlich ihrer Selbsthemmung so ausgelegt, dass sie in deaktiviertem Zustand manuell verstellbar sind. Die Selbsthemmung der Drehgelenke 42, 43 ist somit derart definiert, dass sie einerseits eine Verstellung von Hand erlaubt, andererseits jedoch ausreichend ist, um das Deckelelement 16 in seiner Endlage zu halten.

Zur Notentriegelung kann das Gestänge 46, wie in Fig. 12.3 strichliert gezeigt, heckwärts verschwenkt werden, um den Verdeckkastendeckel 16 für eine manuelle Öffnung freizugeben. Die Zugriffsmöglichkeit kann hierbei durch einen Durchgriff seitens der Fahrzeuginnenseite bei der gezeigten Ausführung oder bei einer Ausführung mit einem angrenzenden Heckdeckel und einem heckseits angrenzenden Kofferraum seitens des Kofferraums realisiert sein.

Es versteht sich, dass neben einer Notentriegelung auch eine Notverriegelung mit entgegengesetzter manueller Betätigung des Gestänges 46 möglich ist.

Die bei der Ausführung nach Fig. 12.1 bis 12.3 verwendeten antreibbaren Drehgelenke 42, 43 entsprechen vorliegend den in den zuvor beschriebenen Ausführungsbeispielen verwendeten Drehgelenken.

Bei sämtlichen in Zusammenhang mit der vorliegenden Erfindung verwendeten antreibbaren Drehgelenken kann es sich nicht nur um hier gezeigte scharnierartige Schwenk-Drehgelenke handeln, sondern auch um eine jede andere bekannte Gelenkart, wie z. B. ein Kugelgelenk, welches insbesondere bei einer Verschwenkung eines Fahrzeugaußenelements in Fahrzeugquerrichtung vorteilhaft sein kann.

### BEZUGSZEICHENLISTE

- 1: Verdeck
- 2: Cabriolet-Fahrzeug
- 3: äußeres Dachrahmenprofilpaar
- 4: äußeres Dachrahmenprofilpaar
- 5: äußeres Dachrahmenprofilpaar
- 6: Fahrzeugaußenelement, Verdeckelement, Front-Dachelement
- 7: Fahrzeugaußenelement, Verdeckelement, mittleres Dachelement
- 8: Fahrzeugaußenelement, Verdeckelement, Heck-Dachelement
- 9: Fahrzeugkarosserie, Hauptlager
- 10A: Drehgelenk
- 10B: Drehgelenk
- 10C: passives Drehgelenk
- 10D: passives Drehgelenk
- 10E: passives Drehgelenk
- 10F: passives Drehgelenk
- 11A: Drehgelenk
- 11B: Drehgelenk
- 12: Windschutzscheibenrahmen
- 13A: Drehgelenk
- 13B: Drehgelenk
- 14A: Drehgelenk
- 14B: Drehgelenk
- 15: Fahrzeugaußenelement, Verdeckelement, Spannbügel
- 16: Fahrzeugaußenelement, Deckelelement, Verdeckkastendeckel
- 16A: Kante
- 16B: Kante
- 17A: Drehgelenk
- 17B: Drehgelenk
- 18: Elektromotor
- 19: Elektromotor
- 20: Elektromotor
- 21: Elektromotor
- 22: Elektromotor
- 23: biegsame Welle
- 24: Getriebeeinrichtung
- 25: Schnecke
- 26: Zahnrad
- 26A: Zahnradstufe
- 26B: Zahnradstufe
- 27: Zahnrad
- 27A: Zahnradstufe
- 27B: Zahnradstufe
- 28: Zahnrad
- 29: Positionserkennungssensor
- 30: Schalenteil
- 31: Lagerschale
- 32: Anschlag
- 33: Stellschraube
- 34: Hebelelement
- 35: Vordersitz-Passagier
- 36: Fond-Passagier
- 37: Höhenhindernis, Garagendecke
- 38: Schraubverbindung
- 39: Hilfshebel
- 40: Anbindung
- 41: Überbrückungselement
- 42: Drehgelenk
- 43: Drehgelenk
- 44: Drehgelenk
- 45: Drehgelenk
- 46: Gestänge
- 47: Hebel
- 48: Hebel
- 49: Anschlag
- A1: Drehachse
- A2: Drehachse
- A3: Drehachse
- A4: Drehachse
- A5: Drehachse

## Patentansprüche

1. Vorrichtung zur Betätigung mehrerer schwenkbarer Fahrzeugaußenelemente (6, 7, 8, 15, 16), welche Verdeckelemente eines Verdecks (1) eines Cabriolet-Fahrzeugs (2) sind und wenigstens zusammenfaltbare Dachelemente (6, 7, 8) umfassen, von denen wenigstens ein Dachelement (8, 15, 16) schwenkbar mit der Fahrzeugkarosserie (9) verbunden ist, wobei die Verbindung der Verdeckelemente (6, 7, 8, 15, 16) untereinander bzw. gegenüber der Fahrzeugkarosserie jeweils wenigstens ein Drehgelenk (10A, 10B, 10C, 10D, 10E, 10F, 11A, 11B, 13A, 13B, 14A, 14B, 17A, 17B, 42, 43, 44, 45) und wenigstens einen Antrieb (18, 19, 20, 21, 22) vorsieht, wobei als Antrieb für Drehgelenke (10A, 10B, 10C, 10D, 10E, 10F, 11A, 11B, 13A, 13B, 14A, 14B, 17A, 17B, 42, 43, 44, 45) von Verbindungen zumindest zwischen den Verdeckelementen (6, 7, 8, 15, 16) untereinander ein Elektromotor (18, 19, 20, 21, 22) vorgesehen ist, welcher ein Antriebsmoment direkt in ein zugeordnetes Drehgelenk (10A, 10B, 11A, 11B, 13A, 13B, 14A, 14B, 17A, 17B; 42, 43) einleitet, wobei jeweils wenigstens ein Drehgelenk (10A, 10B, 11A, 11B, 13A, 13B, 14A, 14B, 17A, 17B, 42, 43) unterschiedlicher Verbindungen separat ansteuerbar ist,
**dadurch gekennzeichnet,**
**dass** eine Verbindung der Verdeckelemente (6, 7, 8, 15, 16) untereinander bzw. mit der Fahrzeugkarosserie (9) durch wenigstens ein ansteuerbares Drehgelenk (10A, 10B; 42, 43) und wenigstens ein passives Drehgelenk (10C, 10D, 10E, 10F; 44, 45) gebildet wird, wobei eine zugeordnete Drehachse (A4) der Verbindung eine Drehachse eines passiven Drehgelenks (10C, 10D) ist.

2. Vorrichtung nach Anspruch 1,
**dadurch gekennzeichnet,**
**dass** ein Moment des Elektromotors (18, 19, 20, 21, 22) mittels einer biegsamen Welle (23) in ein Drehgelenk (10A, 10B, 11A, 11B, 13A, 13B, 14A, 14B, 17A, 17B; 42, 43) einleitbar ist.

3. Vorrichtung nach Anspruch 1 oder 2,
**dadurch gekennzeichnet,**
**dass** jeweils wenigstens zwei bezüglich einer Fahrzeuglängsachse gegenüber liegende Drehgelenke (10A, 10B, 11A, 11B, 13A, 13B, 14A, 14B, 17A, 17B; 42, 43) mittels biegsamer Wellen (23) mit dem Elektromotor (19, 20, 21, 22) verbunden sind.

4. Vorrichtung nach einem der Ansprüche 1 bis 3,
**dadurch gekennzeichnet,**
**dass** wenigstens einige von mehreren Drehgelenken (10A, 10B, 11A, 11B, 13A, 13B, 14A, 14B, 17A, 17B; 42, 43) baugleich ausgeführt sind.

5. Vorrichtung nach einem der Ansprüche 1 bis 4,
**dadurch gekennzeichnet,**
**dass** das Drehgelenk (10A, 10B, 11A, 11B, 13A, 13B, 14A, 14B, 17A, 17B; 42, 43) mittels einer Getriebeeinrichtung (24) angetrieben ist, wobei die Getriebeeinrichtung (24) zwischen einem einem ersten Fahrzeugaußenelement (6) zugeordneten Hebel (3) und einem weiteren Hebel (4) eines zweiten Fahrzeugaußenelementes (7) angeordnet ist, wobei vorzugsweise eine das Moment des Elektromotors (18, 19, 20, 21, 22) übertragende biegsame Welle (23) mit einer Schnecke (25) der Getriebeeinrichtung (24) drehverbunden ist, welche Schnecke (25) mit einem ersten, an einem der Hebel (4) gelagerten Zahnrad (26) in Eingriff steht, welches mit wenigstens einem zweiten Zahnrad (27) in Eingriff steht und mit dem zweiten Hebel (3) wirkverbunden ist.

6. Vorrichtung nach einem der Ansprüche 1 bis 5,
**dadurch gekennzeichnet,**
**dass** ein Positionserkennungssensor (29) an dem Drehgelenk (10A, 10B, 11A, 11B, 13A, 13B, 14A, 14B, 17A, 17B; 42, 43) angeordnet ist, wobei der Positionserkennungssensor (29) vorzugsweise als ein Potentiometer ausgebildet ist, wobei in der Getriebeeinrichtung (24) des jeweiligen Drehgelenks (10A, 10B, 11A, 11B, 13A, 13B, 14A, 14B, 17A, 17B; 42, 43) koaxial zu der jeweiligen Drehachse (A1, A2, A3, A4, A5) ein Mitnehmer vorgesehen ist, auf dem der Potentiometer (29) angeordnet ist.

7. Vorrichtung nach einem der Ansprüche 1 bis 6,
**dadurch gekennzeichnet,**
**dass** an dem Drehgelenk (10A, 10B, 11A, 11B, 13A, 13B, 14A, 14B; 42, 43) ein verstellbarer, insbesondere mit einer Stellschraube (33) ausgebildeter Anschlag (32) vorgesehen ist.

8. Vorrichtung nach einem der Ansprüche 1 bis 7,
**dadurch gekennzeichnet,**
**dass** das Drehgelenk (10A, 10B, 11A, 11B, 13A, 13B, 14A, 14B; 42, 43) um wenigstens annähernd 360° drehbar ausgeführt ist.

9. Vorrichtung nach einem der Ansprüche 1 bis 8,
**dadurch gekennzeichnet,**
**dass** jeder Verbindung der Verdeckelemente (6, 7, 8, 15, 16) untereinander bzw. mit der Fahrzeugkarosserie (9) um eine Drehachse (A1, A2, A3, A4, A5) ein Elektromotor (18, 19, 20, 21, 22) zugeordnet ist.

10. Vorrichtung nach einem der Ansprüche 1 bis 9,
**dadurch gekennzeichnet,**
**dass** mehrere Elektromotoren (18, 19, 20, 21, 22) mit einer zentralen elektrischen Steuereinheit verbunden sind, wobei vorzugsweise zumindest ein Teil der Elektromotoren je eine Steuereinheit aufweist, welche jeweils über einen Datenbus mit wenigstens einer weiteren Steuereinheit für wenigstens einen Elektromotor verbunden ist.

11. Vorrichtung nach einem der Ansprüche 1 bis 10,
**dadurch gekennzeichnet,**
**dass** drei Dachelemente (6, 7, 8) vorgesehen sind, welche S-artig derart zusammenfaltbar sind, dass ein Front-Dachelement (6) in einer Faltstellung bei geöffnetem Verdeck (2) heckwärts verschwenkt über einem mittleren Dachelement (7) und einem darunter liegenden, ebenfalls gegenüber seiner Stellung bei geschlossenem Verdeck heckwärts verschwenkten Heck-Dachelement (8) abgelegt ist und bei einer Öffnungsbewegung des Verdecks (2) das Front-Dachelement (6) um eine erste Drehachse (A1) hoch und heckwärts verschwenkt, das mittlere Dachelement (7) um dessen heckseitige, zweite Drehachse (A2) und das Heck-Dachelement um dessen heckseitige, dritte Drehachse (A3) heckwärts verschwenkt wird, wobei die Verschwenkung des Front-Dachelementes (6) wahlweise im Wesentlichen vor oder während oder nach der Verschwenkung des mittleren Dachelementes (7) und des Heck-Dachelementes (8) erfolgt.

12. Vorrichtung nach einem der Ansprüche 1 bis 11,
**dadurch gekennzeichnet,**
**dass** bei einer Öffnungsbewegung des Verdecks (2) zunächst ein Spannbügel (15) zur Freigabe einer Aufschwenkbewegung eines Verdeckkastendeckels (16) angehoben und nach Aufstellung des Verdeckkastendeckels (16) wieder abgesenkt wird, wonach die Dachelemente (6, 7, 8) auf dem Spannbügel (15) abgelegt werden.

13. Vorrichtung nach einem der Ansprüche 1 bis 10,
**dadurch gekennzeichnet,**
**dass** drei Dachelemente (6, 7, 8) derart faltbar sind, dass bei einer Öffnungsbewegung des Verdecks (2) zunächst ein mittleres Dachelement (7) um dessen heckseitige Drehachse (A2) und ein Heck-Dachelement (8) um dessen heckseitige Drehachse (A3) heckwärts verschwenkt wird; und in wenigstens annähernd horizontaler Position des Heck-Dachelementes (8) ein Front-Dachelement (6) und das mittlere Dachelement (7) derart abgelegt werden, dass das mittlere Dachelement (7) auf dem Heck-Dachelement (8) und wenigstens annähernd parallel zu diesem sowie das Front-Dachelement (6) demgegenüber nach unten in eine wenigstens annähernd vertikale Lage verschwenkt wird.

14. Vorrichtung nach einem der Ansprüche 1 bis 13,
**dadurch gekennzeichnet,**
**dass** bei einer Öffnungsbewegung des Verdecks (2) zunächst ein Verdeckkastendeckel (16) aufgeschwenkt und in Ablageposition der Dachelemente (6, 7, 8) in eine wenigstens annähernd horizontale Lage nach unten verschwenkt wird.

15. Vorrichtung nach einem der Ansprüche 1 bis 14,
**dadurch gekennzeichnet,**
**dass** wenigstens ein Fahrzeugaußenelement ein Deckelelement (16), insbesondere ein Verdeckkastendeckel oder Heckdeckel, ist, welches aus einer Schließstellung wenigstens an einer Kante (16A) durch Verschwenkung mittels wenigstens eines antreibbaren Drehgelenks (42, 43) und wenigstens eines zugeordneten Antriebs (22) um eine gegenüber liegende Kante (16B) anhebbar ist, wobei vorzugsweise das wenigstens eine antreibbare Drehgelenk (42, 43) an einem Gestänge (46) angreift, welches mit einem Ende an der Fahrzeugkarosserie (9) gelenkig festgelegt ist und mit dem anderen Ende an einem in Fahrzeuglängsrichtung beabstandet zu einer Drehachse (A5) des Deckelelementes (16) liegenden Bereich des Deckelelements (16) gelenkig festgelegt ist, wobei das Gestänge (46) aus zwei miteinander verbundenen Hebeln (47, 48) gebildet ist, welche vorzugsweise unterschiedlich lang ausgebildet sind, und wobei eine Verbindung der Hebel (47, 48) untereinander und wenigstens eine der gelenkigen Anbindungen an dem Deckelelement (16) oder der Fahrzeugkarosserie (9) mit einem antreibbaren Drehgelenk (42, 43) ausgebildet ist, und wobei vorzugsweise das Deckelelement (16) in seiner Schließstellung durch Verschwenken des Gestänges (46) in eine Totpunktstellung oder Übertotpunktstellung verriegelbar ist, und wobei vorzugsweise das wenigstens eine antreibbare Drehgelenk (42, 43) in deaktiviertem Zustand zur Notbetätigung manuell verstellbar ausgelegt ist, und wobei vorzugsweise das Deckelelement (16) an der seiner Drehachse (A5) zugeordneten Kante (16B) mittels wenigstens eines passiven Drehgelenks (45), insbesondere eines Schwanenhalslagers (45), an der Fahrzeugkarosserie (9) festgelegt ist.

## Claims

1. A device for actuating a plurality of pivotable external vehicle elements (6, 7, 8, 15, 16), which are hood elements of a hood (1) of a convertible vehicle (2) and which comprise at least foldable roof elements (6, 7, 8), at least one of said roof elements (8, 15, 16) being pivotally connected to the vehicle body (9), the connection of the hood elements (6, 7, 8, 15, 16) to each other and with respect to the vehicle body, respectively, providing at least one rotary joint (10A, 10B, 10C, 10D, 10E, 10F, 11A, 11 B, 13A, 13B, 14A, 14B, 17A, 17B, 42, 43, 44, 45) and at least one drive (18, 19, 20, 21, 22), the drive for the rotary joints (10A, 10B, 10C, 10D, 10E, 10F, 11A, 11B, 13A, 13B, 14A, 14B, 17A, 17B, 42, 43, 44, 45) of connections at least between the hood elements (6, 7, 8, 15, 16) being provided by an electric motor (18, 19, 20, 21, 22) which introduces a drive torque directly into an associated rotary joint (10A, 10B, 11A, 11B, 13A, 13B, 14A, 14B, 17A, 17B; 42, 43), with at least one rotary joint (10A, 10B, 11A, 11B, 13A, 13B, 14A, 14B, 17A, 17B, 42, 43) of different connections being respectively separately controllable, **characterised in that** a connection of the hood elements (6, 7, 8, 15, 16) to each other or to the vehicle body (9) is formed by at least one controllable rotary joint (10A, 10B; 42, 43) and at least one passive rotary joint (10C, 10D, 10E, 10F; 44, 45), with an assigned axis of rotation (A4) of the connection being the axis of rotation of a passive rotary joint (10C, 10D).

2. The device according to claim 1, **characterised in that** a torque of the electric motor (18, 19, 20, 21, 22) can be introduced into a rotary joint (10A, 10B, 11A, 11B, 13A, 13B, 14A, 14B, 17A, 17B; 42, 43) by means of a flexible shaft (23).

3. The device according to claim 1 or 2, **characterised in that**, respectively, at least two rotary joints (10A, 10B, 11A, 11B, 13A, 13B, 14A, 14B, 17A, 17B; 42, 43) which are located opposite one another with respect to a longitudinal vehicle axis, are connected to the electric motor (19, 20, 21, 22) by means of flexible shafts (23).

4. The device according to any one of claims 1 to 3, **characterised in that** at least several of a plurality of rotary joints (10A, 10B, 11A, 11B, 13A, 13B, 14A, 14B, 17A, 17B; 42, 43) are of identical construction.

5. The device according to any one of claims 1 to 4, **characterised in that** the rotary joint (10A, 10B, 11A, 11B, 13A, 13B, 14A, 14B, 17A, 17B; 42, 43) is driven by means of a transmission device (24), said transmission device (24) being arranged between a lever (3) associated with a first external vehicle element (6) and a second lever (4) of a second external vehicle element (7), wherein, preferably, a flexible shaft (23) transmitting the torque of the electric motor (18, 19, 20, 21, 22) is rotatably connected to a screw (25) of the transmission device (24), said screw (25) being in engagement with a first gear (26), which is supported on one of the levers (4) and is in engagement with at least one second gear (27) and is operatively connected with the second lever (3).

6. The device according to any one of claims 1 to 5, **characterised in that** a position detection sensor (29) is arranged at the rotary joint (10A, 10B, 11A, 11 B, 13A, 13B, 14A, 14B, 17A, 17B; 42, 43), said position detection sensor (29) preferably being provided as a potentiometer, a striker being provided in the transmission device (24) of the respective rotary joint (10A, 10B, 11A, 11B, 13A, 13B, 14A, 14B, 17A, 17B; 42, 43) coaxially to the respective axis of rotation (A1, A2, A3, A4, A5), the potentiometer (29) being arranged on said striker.

7. The device according to any one of claims 1 to 6, **characterised in that** an adjustable abutment (32), in particular comprising a regulating screw (33), is provided at the rotary joint (10A, 10B, 11A, 11B, 13A, 13B, 14A, 14B, 42, 43).

8. The device according to any one of claims 1 to 7, **characterised in that** the rotary joint (10A, 10B, 11A, 11 B, 13A, 13B, 14A, 14B, 42, 43) is rotatable by at least approximately 360°.

9. The device according to any one of claims 1 to 8, **characterised in that** each connection of the hood elements (6, 7, 8, 15, 16) to each other and to the vehicle body (9), respectively, has an electric motor (18, 19, 20, 21, 22) assigned to it around an axis of rotation (A1, A2, A3, A4, A5).

10. The device according to any one of claims 1 to 9, **characterised in that** a plurality of electric motors (18, 19, 20, 21, 22) are connected to a central electrical control unit, at least some of the electric motors preferably comprising one control unit each, each of said control units being connected via a databus to at least one further control unit for at least one electric motor.

11. The device according to any one of claims 1 to 10, **characterised in that** three roof elements (6, 7, 8) are provided, which can be folded in an S-shape such that a front roof element (6), rearwardly pivoted in a folding position with the hood (2) opened, is stowed above a middle roof element (7) and over a rear roof element (8), which lies below said middle roof element (7) and which is also rearwardly pivoted with respect to its position with the hood closed, and during an opening movement of the hood (2) said front roof element (6) is upwardly and rearwardly pivoted about a first axis of rotation (A1), said central roof element (7) is pivoted about its rearward, second axis of rotation (A2) and said rear roof element is rearwardly pivoted about its rearward, third axis of rotation (A3), with the pivoting of the front roof element (6) selectively taking place substantially before or during or after the pivoting of the central roof element (7) and the rear roof element (8).

12. The device according to any one of claims 1 to 11, **characterised in that**, during an opening movement of the hood (2), a tensioning bow (15) is first raised to allow the hood compartment cover (16) to swing open upwardly and is then lowered again when the hood compartment cover (16) is upright, after which the roof elements (6, 7, 8) are stowed on the tensioning bow (15).

13. The device according to any one of claims 1 to 10, **characterised in that** three roof elements (6, 7, 8) can be folded such that, during an opening movement of the hood (2), first a central roof element (7) is pivoted about its rear axis of rotation (A2) and a rear roof element (8) is pivoted rearwards about its rear axis (A3); and in an at least approximately horizontal position of the rear roof element (8), a front roof element (6) and the central roof element (7) are stowed such that the central roof element (7) is pivoted on the rear roof element (8) and at least approximately parallel to the later, and the front roof element (6) is pivoted downwards with respect thereto into an approximately vertical position.

14. The device according to any one of claims 1 to 13, **characterised in that**, during an opening movement of the hood (2), first a hood compartment cover (16) is swung open and is pivoted downwards into an at least approximately horizontal position when the roof elements (6, 7, 8) are in the stowed position.

15. The device according to any one of claims 1 to 14, **characterised in that** at least one external vehicle element is a cover element (16), in particular a hood compartment cover or rear cover, which can be lifted from a closed position at at least one edge (16A) by being pivoted by means of at least one controllable rotary joint (42, 43) and at least one associated drive (22) around an opposite edge (16B), said at least one controllable rotary joint (42, 43) preferably acting on a linkage (46), which has one end thereof articulated to the vehicle body (9) and has its other end articulated to an area of the cover element (16) which is spaced apart from an axis of rotation (A5) of the cover element (16) in the longitudinal vehicle direction, said linkage (46) being formed by two levers (47, 48) connected to one another, which preferably differ in length, and a connection of the levers (47, 48) to one another and at least one of the articulations to the cover element (16) or the vehicle body (9) being provided with a driveable rotary joint (42, 43), and the cover element (16) preferably being lockable in its closed position by pivoting the linkage (46) to a dead centre position or over-centre position, and said at least one driveable rotary joint (42, 43) preferably being manually adjustable in its deactivated state for emergency actuation, and said cover element (16) preferably being fixed, at its edge (16B) assigned to its axis of rotation (A5), by means of at least one passive rotary joint (45), in particular a gooseneck bearing (45), to the vehicle body (9).

## Revendications

1. Dispositif d'actionnement de plusieurs éléments extérieurs pivotants (6, 7, 8, 15, 16) d'un véhicule, qui sont des éléments d'une capote (1) d'un véhicule cabriolet (2) et qui comportent au moins des éléments de toit (6, 7, 8) pliables, dont au moins un élément de toit (8, 15, 16) est relié à pivotement avec la carrosserie (9), la liaison des éléments de capote (6, 7, 8, 15, 16) respectivement entre eux et par rapport à la carrosserie prévoyant à chaque fois au moins un pivot (10A, 10B, 10C, 10D, 10E, 10F, 11A, 11B, 13A, 13B, 14A, 14B, 17A, 17B, 42, 43, 44, 45) et au moins un entraînement (18, 19, 20, 21, 22), l'entraînement pour les pivots (10A, 10B, 10C, 10D, 10E, 10F, 11A, 11B, 13A, 13B, 14A, 14B, 17A, 17B, 42, 43, 44, 45) de quelques-unes des liaisons au moins entre les éléments de capote (6, 7, 8, 15, 16) entre eux étant réalisé par un moteur électrique (18, 19, 20, 21, 22), qui introduit un couple d'entraînement directement dans un pivot associé (10A, 10B, 11A, 11 B, 13A, 13B, 14A, 14B, 17A, 17B; 42, 43), au moins un pivot (10A, 10B, 11A, 11B, 13A, 13B, 14A, 14B, 17A, 17B, 42, 43) de chacune des différentes liaisons pouvant être commandé séparément, **caractérisé en ce qu'**une liaison des éléments de capote (6, 7, 8, 15, 16) respectivement entre eux et avec la carrosserie (9) est constituée par au moins un pivot (10A, 10B; 42, 43) commandable et au moins un pivot passif (10C, 10D, 10E, 10F; 44, 45), un axe de pivotement (A4) associé de ladite liaison étant un axe de pivotement du pivot passif (10C, 10D).

2. Dispositif selon la revendication 2, **caractérisé en ce qu'**un couple du moteur électrique (18, 19, 20, 21, 22) peut être introduit dans un pivot (10A, 10B, 11A, 11B, 13A, 13B, 14A, 14B, 17A, 17B; 42, 43) au moyen d'un arbre flexible (23).

3. Dispositif selon la revendication 1 ou 2, **caractérisé en ce qu'**au moins deux pivots (10A, 10B, 11A, 11B, 13A, 13B, 14A, 14B, 17A, 17B; 42, 43), l'un opposé à l'autre par rapport à un axe longitudinal du véhicule, sont reliés chacun au moteur électrique (19, 20, 21, 22) au moyen d'arbres flexibles (23).

4. Dispositif selon l'une quelconque des revendications 1 à 3, **caractérisé en ce qu'**au moins quelquesuns de plusieurs pivots (10A, 10B, 11A, 11B, 13A, 13B, 14A, 14B, 17A, 17B; 42, 43) sont de construction identique.

5. Dispositif selon l'une quelconque des revendications 1 à 4, **caractérisé en ce que** le pivot (10A, 10B, 11A, 11 B, 13A, 13B, 14A, 14B, 17A, 17B; 42, 43) est entraîné au moyen d'un dispositif de transmission (24), ledit dispositif de transmission (24) étant disposé entre un levier (3) associé avec un premier élément extérieur (6) du véhicule et un autre levier (4) d'un deuxième élément extérieur (7) du véhicule, un arbre flexible (23) pour la transmission du couple du moteur électrique (18, 19, 20, 21, 22) étant relié en rotation de préférence avec une vis sans fin (25) du dispositif de transmission (24), ladite vis sans fin (25) s'engrenant avec une première roue dentée (26) supportée par l'un des leviers (4), ladite roue dentée (26) s'engrenant avec au moins une deuxième roue dentée (27) et étant reliée de manière opérative avec le deuxième levier (3).

6. Dispositif selon l'une quelconque des revendications 1 à 5, **caractérisé en ce qu'**un capteur de détection de position (29) est disposé au pivot (10A, 10B, 11A, 11B, 13A, 13B, 14A, 14B, 17A, 17B; 42, 43), ce capteur de détection de position (29) étant réalisé de préférence sous forme d'un potentiomètre, et un entraîneur, sur lequel est disposé ledit potentiomètre (29), étant disposé coaxialement à l'axe de pivotement respectif (A1, A2, A3, A4, A5) dans le dispositif de transmission (24) du pivot respectif (10A, 10B, 11A, 11B, 13A, 13B, 14A, 14B, 17A, 17B; 42, 43).

7. Dispositif selon l'une quelconque des revendications 1 à 6, **caractérisé en ce que** l'on prévoit sur le pivot (10A, 10B, 11A, 11B, 13A, 13B, 14A, 14B, 42, 43) une butée réglable (32), réalisée notamment avec une vis de réglage (33).

8. Dispositif selon l'une quelconque des revendications 1 à 7, **caractérisé en ce que** le pivot (10A, 10B, 11A, 11 B, 13A, 13B, 14A, 14B, 42, 43) est réalisé de manière à permettre sa rotation autour d'au moins environ 360°.

9. Dispositif selon l'une, quelconque des revendications 1 à 8, **caractérisé en ce qu'**un moteur électrique (18, 19, 20, 21, 22) est associé avec chaque liaison des éléments de capote (6, 7, 8, 15, 16) entre eux et avec la carrosserie (9), respectivement, autour d'un axe de pivotement (A1, A2, A3, A4, A5).

10. Dispositif selon l'une quelconque des revendications 1 à 9, **caractérisé en ce que** plusieurs moteurs électriques (18, 19, 20, 21, 22) sont reliés avec une unité de commande électrique centrale, au moins quelques-uns des moteurs électriques présentant chacun de préférence une unité de commande qui est reliée, par un bus de données, avec au moins une autre unité de commande pour au moins un moteur électrique.

11. Dispositif selon l'une quelconque des revendications 1 à 10, **caractérisé en ce que** l'on prévoit trois éléments de toit (6, 7, 8) qui sont pliables en forme de S de manière à ce qu'un élément de toit avant (6) soit déposée, en position pliée lors de l'ouverture de la capote (2), par pivotement vers l'arrière au-dessus d'un élément de toit central (7) et d'un élément de toit arrière (8), disposé au-dessous de ce dernier et également pivotée vers l'arrière par rapport à sa position lors de la fermeture de la capote, et **en ce que** l'on pivote, lors d'un mouvement d'ouverture de la capote (2), l'élément de toit avant (6) vers le haut et vers l'arrière, autour d'un premier axe de pivotement (A1), pivotant vers l'arrière l'élément de toit central (7) autour de son deuxième axe de pivotement (A2) arrière et l'élément de toit arrière autour de son troisième axe de pivotement (A3) arrière, le pivotement de l'élément de toit avant (6) étant optionnellement effectué sensiblement avant, pendant ou après le pivotement de l'élément de toit central (7) et de l'élément de toit arrière (8).

12. Dispositif selon l'une quelconque des revendications 1 à 11, **caractérisé en ce que**, lors d'un mouvement d'ouverture de la capote (2), on soulève d'abord un étrier de serrage (15) pour permettre un pivotement d'ouverture vers le haut d'un couvercle de compartiment de capote (16) et, après le positionnement debout du couvercle de compartiment de capote (16), on abaisse ledit étrier de serrage (15) sur lequel on dépose alors les éléments de toit (6, 7, 8).

13. Dispositif selon l'une quelconque des revendications 1 à 10, **caractérisé en ce que** trois éléments de toit (6, 7, 8) sont pliables de manière à ce que, lors d'un mouvement d'ouverture de la capote (2), un élément de toit central (7) soit d'abord pivoté vers l'arrière autour de son axe de pivotement (A2) arrière et un élément de toit arrière (8) soit pivoté vers l'arrière autour de son axe de pivotement (A3) arrière; et lorsque l'élément de toit arrière (8) se trouve en position au moins environ horizontale, un élément de toit avant (6) et l'élément de toit central (7) sont déposés de manière à pivoter l'élément de toit central (7) sur lélément de toit arrière (8) et au moins parallèlement à celui-ci et à pivoter l'élément de toit avant (6) vers le bas, par rapport à ce pivotement, dans une position au moins environ verticale.

14. Dispositif selon l'une quelconque des revendications 1 à 13, **caractérisé en ce que**, lors d'un mouvement d'ouverture de la capote (2), on ouvre d'abord un couvercle de compartiment de capote (16) par pivotement vers le haut, et que l'on pivote ledit couvercle (16) vers le bas, dans une position au moins environ horizontale, lorsque les éléments de toit (6, 7, 8) se trouvent en position de rangement.

15. Dispositif selon l'une quelconque des revendications 1 à 14, **caractérisé en ce qu'**au moins un élément extérieur du véhicule est un élément de couvercle (16), notamment un couvercle de compartiment de capote ou un couvercle arrière, que l'on peut soulever par un bord (16A) à partir d'une position fermée, par pivotement au moyen d'au moins un pivot (42, 43) entraînable et au moins un entraînement (22) associé autour d'un bord opposé (16B), ledit au moins un pivot (42, 43) entraînable agissant de préférence sur une tringlerie (46) dont une extrémité est articulée sur la carrosserie (9) et l'autre extrémité est articulée sur une région de l'élément de couvercle (16), cette région étant écartée d'un axe de pivotement (A5) de l'élément de couvercle (16) en direction longitudinale du véhicule, ladite tringlerie (46) étant constituée par deux leviers (47, 48) reliés l'un à l'autre, qui présentent de préférence des longueurs différentes, et une liaison des leviers (47, 48) entre eux et au moins l'une des liaisons articulées avec l'élément de couvercle (16) ou avec la carrosserie (9) étant réalisée avec un pivot (42, 43) entraînable, et l'élément de couvercle (16) pouvant être verrouillé de préférence dans sa position de fermeture par pivotement de la tringlerie (46) vers une position de point mort ou de dépassement de point mort, et l'au moins un pivot (42, 43) entraînable étant réalisé de préférence de manière à permettre son réglage manuel en état désactivé pour son actionnement de secours, et l'élément de couvercle (16) étant fixé à la carrosserie (9), de préférence par son bord (16B) associé avec son axe de pivotement (A5) par au moins un pivot passif (45), notamment un palier à col de cigogne (45).
